# EUROPÄISCHE PATENTSCHRIFT

(11) **EP 3 977 682 B1**
(45) Veröffentlichungstag und Bekanntmachung des Hinweises auf die Patenterteilung: **27.03.2024**
(21) Anmeldenummer: 20728742.6
(22) Anmeldetag: 27.05.2020
(51) Int. Cl.: H04L 12/413, H04L 12/40, H04L 43/50, H04L 43/0823

(54) **FEHLERERKENNUNG-TESTEINRICHTUNG FÜR EINE TEILNEHMERSTATION EINES SERIELLEN BUSSYSTEMS UND VERFAHREN ZUM TESTEN VON MECHANISMEN ZUR FEHLERERKENNUNG BEI EINER KOMMUNIKATION IN EINEM SERIELLEN BUSSYSTEM**
ERROR DETECTION TEST DEVICE FOR A SUBSCRIBER STATION OF A SERIAL BUS SYSTEM, AND METHOD FOR TESTING MECHANISMS FOR DETECTING ERRORS IN A COMMUNICATION IN A SERIAL BUS SYSTEM
DISPOSITIF DE TEST DE DÉTECTION D'ERREUR POUR UNE STATION D'ABONNÉ D'UN SYSTÈME DE BUS SÉRIE ET PROCÉDÉ DE TEST DE MÉCANISMES DE DÉTECTION D'ERREUR LORS D'UNE COMMUNICATION DANS UN SYSTÈME DE BUS SÉRIE

(30) Priorität: 03.06.2019 DE 102019208058
(43) Veröffentlichungstag der Anmeldung: 06.04.2022
(73) Patentinhaber: Robert Bosch GmbH, 70442 Stuttgart (DE)
(72) Erfinder: HARTWICH, Florian, 72762 Reutlingen (DE); HORST, Christian, 72144 Dusslingen (DE); GEBAUER, Carsten, 74232 Abstatt (DE); MUTTER, Arthur, 73765 Neuhausen (DE)
(86) Internationale Anmeldenummer: PCT/EP2020/064666
(87) Internationale Veröffentlichungsnummer: WO 2020/244983

(56) Entgegenhaltungen:
- EP-A1- 2 978 168
- DE-A1-102004 002 771
- DE-A1-102012 110 712

## Beschreibung

### Technisches Gebiet

Die vorliegende Erfindung betrifft eine Fehlererkennung-Testeinrichtung für eine Teilnehmerstation eines seriellen Bussystems und ein Verfahren zum Testen von Mechanismen zur Fehlererkennung bei einer Kommunikation in einem seriellen Bussystem, mit welchen im laufenden Betrieb die Funktion von im Kommunikationsprotokoll definierten Mechanismen zur Fehlererkennung getestet werden kann.

### Stand der Technik

Zur Kommunikation zwischen Sensoren und Steuergeräten, beispielsweise in Fahrzeugen oder industriellen Anlagen, ist anstelle einer Punkt-zu-Punkt-Verbindung aus Kostengründen ein Bussystem einsetzbar, in welchem Daten als Nachrichten im Standard ISO11898-1:2015 als CAN Protokoll-Spezifikation mit CAN FD übertragen werden. Die Nachrichten werden zwischen den Teilnehmerstationen des Bussystems, wie Sensor, Steuergerät, Geber, usw., übertragen. CAN FD wird derzeit in der Einführungsphase im ersten Schritt meist mit einer Daten-Bitrate von 2Mbit/s bei der Übertragung von Bits des Datenfelds und mit einer Arbitrations-Bitrate von 500kbit/s bei der Übertragung von Bits des Arbitrationsfelds im Fahrzeug eingesetzt.

Über ein solches Bussystem werden immer mehr Informationen ausgetauscht. Insbesondere sollen neben dem reinen Datentransport auch andere Funktionen unterstützt werden, wie Safety (Funktionale Sicherheit), Security (Daten Sicherheit) und QoS (Quality of Service, Dienstgüte, wie beispielsweise Garantie einer maximalen Latenz für einen Rahmen, Zeitsynchronisation der Teilnehmerstationen (Knoten) in dem Bussystem. Auch besteht der Wunsch der Anwender, die Datenrate im Bussystem weiter zu steigern, um die Schnelligkeit der Datenübertragung im Bussystem zumindest beizubehalten und möglichst noch weiter zu erhöhen.

Die Schnelligkeit der Datenübertragung im Bussystem wird auch dadurch beeinflusst, dass die Datenübertragung im Bussystem korrekt funktioniert. Daher sind Mechanismen zur Fehlererkennung vorhanden. Treten Fehler auf, wird ein derzeit übertragener Rahmen abgebrochen und anschließend erneut übertragen. Dies hat eine Mehrfachübertragung von Daten zu Folge, was wiederum die Schnelligkeit der Datenübertragung senkt.

Noch dazu besteht das Problem, dass für eine Betrachtung der Systemsicherheit des Bussystems nur diejenigen Mechanismen zur Fehlererkennung angerechnet werden, die im System auch geprüft werden können. Es könnte beispielsweise eine digitale Schaltung, welche die Prüfsumme (CRC) eines empfangenen Rahmens prüft, einen Defekt entwickeln und danach alle Prüfsummen (CRCs) als gültig anerkennen. Ein solcher Defekt kann ein Hardware-Defekt sein oder durch Signalstörungen entstehen, die durch Einstrahlungen verursacht werden. Daher ist ein solcher Defekt nicht einfach zu erkennen.

DE 10 2004 002 771 A1 zeigt ein Verfahren und eine Vorrichtung zur Bewertung von Einstellungen eines CAN-Geräts, welche mit einem (modifizierten) Testsignal prüfen, ob ein CAN-Gerät mit einer Fehlerbotschaft auf unterschiedliche Testsignale reagiert. Hierfür werden als Mittel zum Erzeugen und Senden von physikalisch modifizierten Testsignalen ein Signalgenerator und eine CAN-Endstufe verwendet.

DE 10 2012 110 712 A1 zeigt ein Verfahren und ein System zur Funktionsprüfung einer Fehlererkennungseinheit einer CAN-Bus-Controllereinheit. Das System hat hierfür einen Mikrocontroller mit zwei oder drei CAN-Bus-Controllereinheiten, die Bestandteil eines Mikro-Controllers sind.

### Offenbarung der Erfindung

Daher ist es Aufgabe der vorliegenden Erfindung, eine Fehlererkennung-Testeinrichtung für eine Teilnehmerstation eines seriellen Bussystems und ein Verfahren zum Testen von Mechanismen zur Fehlererkennung bei einer Kommunikation in einem seriellen Bussystem bereitzustellen, welche die zuvor genannten Probleme lösen. Insbesondere sollen eine Fehlererkennung-Testeinrichtung für eine Teilnehmerstation eines seriellen Bussystems und ein Verfahren zum Testen von Mechanismen zur Fehlererkennung bei einer Kommunikation in einem seriellen Bussystem bereitgestellt werden, bei welchen bei Kompatibilität mit früheren Kommunikationsversionen der Teilnehmerstation und mit hoher Systemsicherheit eine Steigerung der Menge der Nutzdaten pro Rahmen im Vergleich zu früheren Kommunikationsversionen der Teilnehmerstation realisiert werden kann.

Die Aufgabe wird durch eine Fehlererkennung-Testeinrichtung für eine Teilnehmerstation eines seriellen Bussystems mit den Merkmalen von Anspruch 1 gelöst. Die Fehlererkennung-Testeinrichtung hat ein Auswertemodul zum Auswerten, welches Bit in einem Signal gestört werden muss, damit die Empfänger des resultierenden Signals, bei dem das mindestens eine Bit gestört ist, die Funktion eines vorbestimmten Fehler-Erkennungs-Mechanismus prüfen können, wobei das Signal im Betrieb der Teilnehmerstation von einem Protokoll-Steuerwerk bearbeitet wird, um als Rahmen auf einen Bus des Bussystems übertragen zu werden oder nach Empfang eines Rahmens von dem Bus das Signal aus dem Rahmen zu decodieren, und einem Ausgangs-Anschluss zur Ausgabe eines Schaltsignals an das Protokoll-Steuerwerk, um das von dem Auswertemodul ausgewertete mindestens eine Bit in Bezug auf das von dem Protokoll-Steuerwerk ausgegebene Signal zu stören, wobei das Auswertemodul ausgestaltet ist, das Schaltsignal auf der Grundlage des von dem Auswertemodul ausgewerteten mindestens einen Bits zu erzeugen, wie in Anspruch 1 beschrieben.

Die Fehlererkennung-Testeinrichtung ermöglicht, dass die Teilnehmerstation als Sender und/oder Empfänger eines Rahmens, der insbesondere ein CAN-Rahmen oder ein anderer seriell gesendeter Rahmen sein kann, einen korrekten Rahmen durch gezieltes Einstreuen von Bit-Fehlern verfälschen kann. Hierbei kann die Fehlererkennung-Testeinrichtung den Rahmen so verfälschen, dass der Empfänger des Rahmens, je nach Position des Bit-Fehlers einen vorbestimmten Fehler erkennt, insbesondere einen Prüfsummenfehler (CRC-Fehler) oder einen Format-Fehler des Rahmens oder einen Stuff-Fehler. Ein Stuff-Fehler liegt vor, wenn eine Stuffing-Regel verletzt ist, die bei der Erzeugung des Rahmens angewendet wurde. Beispielsweise gilt bei CAN FD bis zum Beginn des CRC-Feldes eine dynamische Bit-Stuffing-Regel, gemäß welcher nach 5 gleichen Bits in Folge ein inverses Stuff-Bit einzufügen ist. Außerdem gilt bei CAN FD ab dem Beginn des CRC-Feldes eine feste Stuffing-Regel, gemäß welcher nach einer festen Zahl von Bits ein fixed Stuff-Bit einzufügen ist. Alternativ können statt nur einem Stuff-Bit eine Anzahl von 2 oder mehr Bits als fixed Stuff-Bits eingefügt werden. Selbstverständlich sind die erwähnten Bit-Stuffing-Regeln bei einem CAN FD - Nachfolger modifizierbar oder sind andere Bit-Stuffing-Regeln anwendbar.

Haben die Empfänger des von der Fehlererkennung-Testeinrichtung verfälschten Rahmens den Fehler erkannt, können die Empfänger den Fehler mit den dafür zur Verfügung stehenden Möglichkeiten melden, insbesondere durch Senden eines Fehlerrahmens.

Somit kann mit der Fehlererkennung-Testeinrichtung die korrekte Funktion der im Protokoll definierten Mechanismen zur Fehlererkennung im fertigen System verifiziert werden. Daher können diese Mechanismen bei der Betrachtung der Systemsicherheit angerechnet werden.

Als Folge davon kann mit der Teilnehmerstation auch bei Steigerung der Datenrate ein Senden und Empfangen der Rahmen mit großer Flexibilität im Hinblick auf neue Zusatzfunktionen des Bussystems sowie mit geringer Fehlerquote und überprüfbaren Mechanismen zur Fehlererkennung gewährleistet werden.

Hierbei ist es mit der Teilnehmerstation in dem Bussystem insbesondere möglich, in einer ersten Kommunikationsphase eine von CAN bekannte Arbitration beizubehalten und dennoch die Übertragungsrate gegenüber CAN oder CAN FD nochmals beträchtlich zu steigern.

Das von der Teilnehmerstation durchgeführte Verfahren kann auch zum Einsatz kommen, wenn in dem Bussystem auch mindestens eine CAN-Teilnehmerstation und/oder mindestens eine CAN FD Teilnehmerstation vorhanden ist, die Nachrichten nach dem CAN-Protokoll und/oder CAN FD Protokoll senden.

Vorteilhafte weitere Ausgestaltungen der Fehlererkennung-Testeinrichtung sind in den abhängigen Ansprüchen angegeben.

Möglich ist, dass die Fehlererkennung-Testeinrichtung zudem ein Steuermodul aufweist zum Einschalten der Fehlererkennung-Testeinrichtung kurz vor dem Start des Signals oder zum Ausschalten der Fehlererkennung-Testeinrichtung nach dem Ende des Signals.

Das Auswertemodul und/oder das Steuermodul sind/ist gegebenenfalls ausgestaltet, zudem einen Identifizierer des Rahmens und/oder ein Steuerbit in Bezug auf den zu sendenden Rahmen (auszuwerten, um zu bestimmen, ob die Fehlererkennung-Testeinrichtung kurz vor dem Start des Signals einzuschalten ist oder nicht.

Das Auswertemodul und/oder das Steuermodul sind/ist gegebenenfalls ausgestaltet, zudem ein Steuerbit im Speicher für den zu sendenden Rahmen auszuwerten, um zu bestimmen, ob die Fehlererkennung-Testeinrichtung kurz vor dem Start des Signals einzuschalten ist oder nicht.

Die Fehlererkennung-Testeinrichtung hat, wie zudem in Anspruch 1 beschrieben, mindestens einen Zähler zum Zählen von Bits des Signals, mindestens ein Konfigurationsregister zur Vorgabe eines vorbestimmten Zählerwerts für den Zähler nach dem Einschalten der Fehlererkennung-Testeinrichtung, mindestens einen Eingangs-Anschluss zum Empfang von Informationen zu dem Signal von dem Protokoll-Steuerwerk. Der mindestens eine Ausgangs-Anschluss kann ausgeordnet sein zur Signalisierung mit dem Schaltsignal, wann mindestens ein Teil eines Bits im Signal gestört werden soll, wobei die Störung des Signals einem Prüfsummenfehler und/oder einem Stuff-Fehler und/oder einem Format-Fehler entspricht. Hierbei kann der mindestens eine Zähler ausgestaltet sein, jedes Bit des Signals auf der Grundlage der an dem mindestens einen Eingangs-Anschluss empfangenen Informationen zu zählen und an dem mindestens einen Ausgangs-Anschluss das Schaltsignal auf der Grundlage des von dem mindestens einen Konfigurationsregister vorgegebenen Zählerwerts auszugeben.

Denkbar ist, dass der mindestens eine Zähler ausgestaltet ist, jedes Bit des Signals auf der Grundlage der an dem mindestens einen Eingangs-Anschluss empfangenen Informationen zu zählen und bei Erreichen des vom Konfigurationsregister vorgegebenen Zählerwerts an dem Ausgangs-Anschluss das Schaltsignal auszugeben.

Denkbar ist zudem, dass das Signal ein Sendesignal ist, das in einem Rahmen auf den Bus zu senden ist, oder dass das Signal ein Empfangssignal ist, das in einem Rahmen von dem Bus zu empfangen ist, oder dass das Signal für einen Zwischenrahmenabstand zwischen Rahmen auf dem Bus erzeugt wurde.

Optional unterscheidet sich für einen Rahmen, der zwischen Teilnehmerstationen des Bussystems ausgetauscht wird, die Bitzeit eines in der ersten Kommunikationsphase auf den Bus gesendeten Signals von einer Bitzeit eines in der zweiten Kommunikationsphase gesendeten Signals.

Das Auswertemodul kann ausgestaltet sein, das Schaltsignal derart zu erzeugen, dass das Bit des Signals invertiert wird.

Gemäß einem Ausführungsbeispiel ist das Auswertemodul ausgestaltet, das Schaltsignal derart zu erzeugen, dass mindestens ein Zeitquantum des Bits des Signals invertiert wird, wobei das Bit in mindestens zwei Zeitquanten unterteilt ist und wobei die Fehlererkennung-Testeinrichtung derart ausgestaltet ist, dass konfigurierbar ist, in wie viele Zeitquanten das Bit unterteilt ist.

Der Rahmen kann kompatibel zu CAN FD aufgebaut sein.

Mindestens eine der zuvor beschriebenen Fehlererkennung-Testeinrichtung kann Teil einer Teilnehmerstation für ein serielles Bussystem sein. Die Teilnehmerstation hat zudem eine Kommunikationssteuereinrichtung zum Steuern einer Kommunikation der Teilnehmerstation mit mindestens einer anderen Teilnehmerstation des Bussystems, wobei die Kommunikationssteuereinrichtung das Protokoll-Steuerwerk aufweist, das ausgestaltet ist, das Signal im Betrieb der Teilnehmerstation zu bearbeiten, um als Rahmen auf einen Bus des Bussystems übertragen zu werden oder nach Empfang eines Rahmens von dem Bus das Signal aus dem Rahmen zu decodieren, und eine Sende-/Empfangseinrichtung zum Senden eines von der Kommunikationssteuereinrichtung erzeugten Sendesignals als Rahmen auf den Bus und/oder zum Empfangen eines Rahmens von dem Bus.

Die Teilnehmerstation kann zudem ein Logikmodul aufweisen zur Eingabe des von dem Protokoll-Steuerwerk bearbeiteten Signals und des Schaltsignals und zur Ausgabe des gestörten Signals, wobei das Schaltsignal nur für den Teil des Bits aktiv ist, der gestört werden soll, und wobei die Sende-/Empfangseinrichtung ausgestaltet ist, das mit der mindestens einen Fehlererkennung-Testeinrichtung gestörte Signal zu speichern, um das gestörte Signal auszuwerten.

Die zuvor beschriebene Teilnehmerstation kann Teil eines Bussystems sein, das zudem einen Bus und mindestens zwei Teilnehmerstationen umfasst, welche über den Bus derart miteinander verbunden sind, dass sie seriell miteinander kommunizieren können. Hierbei ist mindestens eine der mindestens zwei Teilnehmerstationen eine zuvor beschriebene Teilnehmerstation.

Die zuvor genannte Aufgabe wird zudem durch ein Verfahren zum Testen von Mechanismen zur Fehlererkennung bei einer Kommunikation in einem seriellen Bussystem nach Anspruch 15 gelöst. Das Verfahren wird mit einer mit einer Fehlererkennung-Testeinrichtung für eine Teilnehmerstation des Bussystems ausgeführt, wobei das Verfahren die Schritte aufweist, Auswerten, mit einem Auswertemodul der Fehlererkennung-Testeinrichtung, welches Bit in einem Signal gestört werden muss, damit die Empfänger des resultierenden Signals, bei dem das mindestens eine Bit gestört ist, die Funktion eines vorbestimmten Fehler-Erkennungs-Mechanismus prüfen können, wobei das Signal im Betrieb der Teilnehmerstation von einem Protokoll-Steuerwerk der Teilnehmerstation bearbeitet wird, um als Rahmen auf einen Bus des Bussystems übertragen zu werden oder nach Empfang eines Rahmens von dem Bus das Signal aus dem Rahmen zu decodieren, und Ausgeben, mit einem Ausgangs-Anschluss, eines Schaltsignals an das Protokoll-Steuerwerk, um das von dem Auswertemodul ausgewertete mindestens eine Bit in dem von dem Protokoll-Steuerwerk ausgegebenen Signal zu stören, wobei das Auswertemodul das Schaltsignal auf der Grundlage des von dem Auswertemodul ausgewerteten mindestens einen Bits erzeugt, wie in Anspruch 15 beschrieben.

Das Verfahren bietet dieselben Vorteile, wie sie zuvor in Bezug auf die Fehlererkennung-Testeinrichtung genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Schaubild zur Veranschaulichung des Aufbaus einer Nachricht, die von einer Teilnehmerstation des Bussystems gemäß dem ersten Ausführungsbeispiel gesendet werden kann;
Fig. 3 ein vereinfachtes schematisches Blockschaltbild einer Teilnehmerstation des Bussystems gemäß dem ersten Ausführungsbeispiel;
Fig. 4 einen zeitlichen Verlauf von Bussignalen CAN_H und CAN_L, die bei der Teilnehmerstation gemäß dem ersten Ausführungsbeispiel Bussignale CAN-FX_H und CAN-FX_L sein können;
Fig. 5 einen zeitlichen Verlauf einer Differenzspannung VDIFF der Bussignale CAN-FX_H und CAN-FX_L bei der Teilnehmerstation gemäß dem ersten Ausführungsbeispiel;
Fig. 6 und Fig. 7 jeweils ein Zeitdiagramm zur Veranschaulichung einer speziellen Bitfolge eines Sendesignals TXD; und
Fig. 8 und Fig. 9 jeweils unterschiedliche Sendesignale, die aus dem Sendesignal TXD von Fig. 6 und Fig. 7 für einen TXD-Anschluss einer Teilnehmerstation gemäß einem zweiten Ausführungsbeispiel erzeugbar sind.

In den Figuren sind gleiche oder funktionsgleiche Elemente, sofern nichts anderes angegeben ist, mit denselben Bezugszeichen versehen.

### Beschreibung der Ausführungsbeispiele

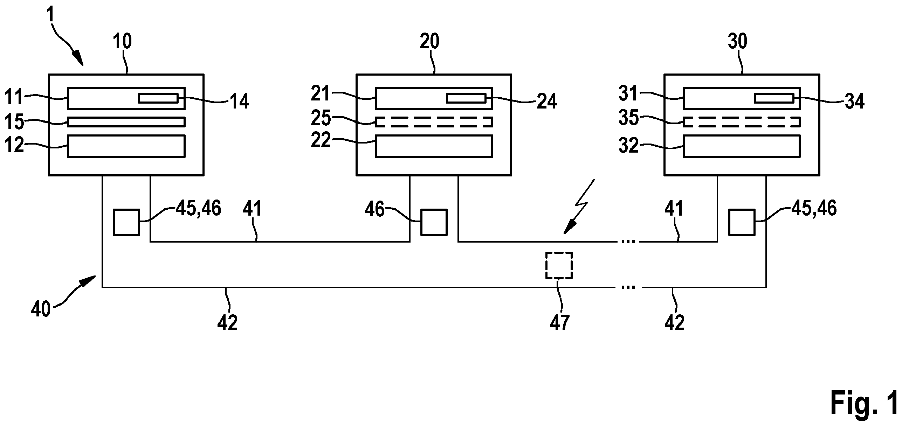

Fig. 1 zeigt als Beispiel ein Bussystem 1, das ein serielles Bussystem ist, in dem Daten seriell übertragen werden. Das Bussystem 1 kann insbesondere grundlegend für ein CAN-Bussystem, ein CAN FD-Bussystem, ein CAN-FD-Nachfolgebussystem, das nachfolgend CAN FX-Bussystem genannt wird, und/oder Abwandlungen davon ausgestaltet sein, wie nachfolgend als Beispiel beschrieben. Das Bussystem 1 kann in einem Fahrzeug, insbesondere einem Kraftfahrzeug, einem Flugzeug, usw., oder im Krankenhaus oder einer industriellen Anlage usw. Verwendung finden.

In Fig. 1 hat das Bussystem 1 eine Vielzahl von Teilnehmerstationen 10, 20, 30, die jeweils an einen Bus 40 mit einer ersten Busader 41 und einer zweiten Busader 42 angeschlossen sind. Die Busadern 41, 42 können bei einem CAN basierten Bussystem auch CAN_H und CAN_L oder CAN-FX_H und CAN-FX_L genannt werden und dienen zur elektrischen Signalübertragung nach Einkopplung der dominanten Pegel bzw. Erzeugung von rezessiven Pegeln für ein Signal im Sendezustand. Über den Bus 40 sind Nachrichten 45, 46 in der Form von Signalen zwischen den einzelnen Teilnehmerstationen 10, 20, 30 seriell übertragbar. Tritt bei der Kommunikation auf dem Bus 40 ein Fehler auf, wie durch den gezackten schwarzen Blockpfeil in Fig. 1 dargestellt, kann optional ein Fehlerrahmen 47 (Error Flag) gesendet werden. Der Fehlerrahmen 47 kann optional derart gestaltet sein, dass der Fehlerrahmen 47 die Art des erkannten Fehlers mitteilt. Die Teilnehmerstationen 10, 20, 30 sind beispielsweise Steuergeräte, Sensoren, Anzeigevorrichtungen, usw. eines Kraftfahrzeugs.

Wie in Fig. 1 gezeigt, hat die Teilnehmerstation 10 eine Kommunikationssteuereinrichtung 11, eine Sende-/Empfangseinrichtung 12, ein Kommunikationsfehler-Erkennungsmodul 14 und eine Fehlererkennung-Testeinrichtung 15. Die Teilnehmerstation 20 hat eine Kommunikationssteuereinrichtung 21, eine Sende-/Empfangseinrichtung 22 und ein Kommunikationsfehler-Erkennungsmodul 14. Optional hat die Teilnehmerstation 20 zudem eine Fehlererkennung-Testeinrichtung 15. Die Teilnehmerstation 30 hat eine Kommunikationssteuereinrichtung 31, eine Sende-/Empfangseinrichtung 32 und ein Kommunikationsfehler-Erkennungsmodul 34. Optional hat die Teilnehmerstation 30 zudem eine Fehlererkennung-Testeinrichtung 35. Die Sende-/Empfangseinrichtungen 12, 22, 32 der Teilnehmerstationen 10, 20, 30 sind jeweils direkt an den Bus 40 angeschlossen, auch wenn dies in Fig. 1 nicht veranschaulicht ist.

Die Kommunikationssteuereinrichtungen 11, 21, 31 dienen jeweils zur Steuerung einer Kommunikation der jeweiligen Teilnehmerstation 10, 20, 30 über den Bus 40 mit mindestens einer anderen Teilnehmerstation der Teilnehmerstationen 10, 20, 30, die an den Bus 40 angeschlossen sind.

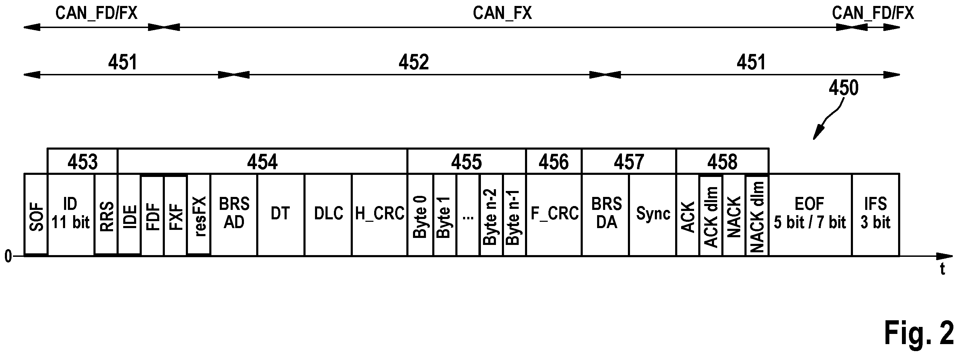

Die Kommunikationssteuereinrichtungen 11, 31 erstellen und lesen erste Nachrichten 45, die beispielsweise modifizierte CAN Nachrichten 45 sind. Hierbei sind die modifizierten CAN Nachrichten 45 auf der Grundlage eines CAN FD-Nachfolgeformats aufgebaut, das nachfolgend auch CAN FX-Format genannt wird und das in Bezug auf Fig. 2 detaillierter beschrieben ist. Die Kommunikationssteuereinrichtungen 11, 31 können zudem ausgeführt sein, um je nach Bedarf eine CAN FX-Nachricht 45 oder eine CAN FD-Nachricht 46 für die Sende-/Empfangseinrichtungen 12, 32 bereitzustellen oder von dieser zu empfangen. Hierbei kommen die Module 14, 34 und die Einrichtungen 15, 35 zum Einsatz, wie nachfolgend genauer beschrieben. Die Kommunikationssteuereinrichtungen 11, 31 erstellen und lesen also eine erste Nachricht 45 oder zweite Nachricht 46, wobei sich die erste und zweite Nachricht 45, 46 durch ihren Datenübertragungsstandard unterscheiden, nämlich in diesem Fall CAN FX oder CAN FD.

Mit den beiden Teilnehmerstationen 10, 30 ist eine Bildung und dann Übertragung von Nachrichten 45 mit dem CAN FX Format sowie der Empfang solcher Nachrichten 45 realisierbar.

Die Kommunikationssteuereinrichtung 21 kann wie ein herkömmlicher CAN-Controller nach ISO 11898-1:2015 ausgeführt sein, d.h. wie ein CAN FD toleranter Classical CAN CAN-Controller oder ein CAN FD Controller. Die Kommunikationssteuereinrichtung 21 erstellt und liest zweite Nachrichten 46, beispielsweise CAN FD-Nachrichten 46. Bei den CAN FD-Nachrichten 46 kann eine Anzahl von 0 bis zu 64 Datenbytes umfasst sein, die noch dazu mit einer deutlich schnelleren Datenrate als bei einer Classical CAN-Nachricht übertragen werden. Insbesondere ist die Kommunikationssteuereinrichtung 21 wie ein herkömmlicher CAN FD-Controller ausgeführt.

Die Sende-/Empfangseinrichtung 22 kann wie ein herkömmlicher CAN Transceiver nach ISO 11898-1:2015 oder CAN FD Transceiver ausgeführt sein. Die Sende-/Empfangseinrichtungen 12, 32 können ausgeführt sein, um je nach Bedarf Nachrichten 45 gemäß dem CAN FX-Format oder Nachrichten 46 gemäß dem derzeitigen CAN FD-Format für die zugehörige Kommunikationssteuereinrichtung 11, 31 bereitzustellen oder von dieser zu empfangen.

Die Module 14, 24, 34 sind in der Funktion identisch aufbaubar. Die Einrichtungen 15, 25, 35 sind in der Funktion identisch aufbaubar.

Fig. 2 zeigt für die Nachricht 45 einen CAN FX Rahmen 450, wie er von der Kommunikationssteuereinrichtung 11 für die Sende-/Empfangseinrichtung 12 zum Senden auf den Bus 40 bereitgestellt wird. Hierbei erstellt die Kommunikationssteuereinrichtung 11 den Rahmen 450 bei dem vorliegenden Ausführungsbeispiel als kompatibel mit CAN FD, wie auch in Fig. 2 veranschaulicht. Dasselbe gilt analog für die Kommunikationssteuereinrichtung 31 und die Sende-/Empfangseinrichtung 32 der Teilnehmerstation 30.

Gemäß Fig. 2 ist der CAN FX-Rahmen 450 für die CAN-Kommunikation auf dem Bus 40 in unterschiedliche Kommunikationsphasen 451, 452 unterteilt, nämlich eine Arbitrationsphase 451 und eine Datenphase 452. Der Rahmen 450 hat ein Arbitrationsfeld 453, ein Steuerfeld 454, ein Datenfeld 455, ein Prüfsummenfeld 456 für eine Prüfsumme F_CRC, ein Synchronisationsfeld 457 und ein Bestätigungsfeld 458.

In der Arbitrationsphase 451 wird bei dem Rahmen 450 mit Hilfe des Identifizierers (ID), der beispielsweise 11 Bit hat, in dem Arbitrationsfeld 453 bitweise zwischen den Teilnehmerstationen 10, 20, 30 ausgehandelt, welche Teilnehmerstation 10, 20, 30 die Nachricht 45, 46 mit der höchsten Priorität senden möchte und daher für die nächste Zeit zum Senden in der anschließenden Datenphase 452 einen exklusiven Zugriff auf den Bus 40 des Bussystems 1 bekommt.

Die Rahmen 450 arbitrieren mit ihrem Identifizier (ID) linksbündig gegen andere Rahmen 450 oder gegen CAN FD Rahmen um den nächsten exklusiven, kollisionsfreien Zugriff auf den Bus 40. Dem Identifizierer (ID) folgt ein RRS-Bit.

Das nachfolgende IDE-Bit wird dominant gesendet, da ein rezessiv gesendetes IDE-Bit im CAN FD Format auf einen 29-Bit Identifier umschaltet.

Bei dem Rahmen 450 gilt, dass Bits, die an ihrer unteren Linie in Fig. 2 mit einem dicken Strich dargestellt sind, in dem Rahmen 450 als dominant gesendet werden. Außerdem gilt bei dem Rahmen 450, dass Bits, die an ihrer oberen Linie in Fig. 2 mit einem dicken Strich dargestellt sind, in dem Rahmen 450 als rezessiv gesendet werden.

In der Arbitrationsphase 451 des Rahmens 450 wird ein Physical Layer wie bei CAN und CAN-FD verwendet. Der Physical Layer entspricht der Bitübertragungsschicht oder Schicht 1 des bekannten OSI-Modells (Open Systems Interconnection Modell).

Ein wichtiger Punkt während der Phase 451 ist, dass das bekannte CSMA/CR-Verfahren Verwendung findet, welches gleichzeitigen Zugriff der Teilnehmerstationen 10, 20, 30 auf den Bus 40 erlaubt, ohne dass die höher priorisierte Nachricht 45, 46 zerstört wird. Dadurch können dem Bussystem 1 relativ einfach weitere Bus-Teilnehmerstationen 10, 20, 30 hinzugefügt werden, was sehr vorteilhaft ist.

Das CSMA/CR-Verfahren hat zur Folge, dass es sogenannte rezessive Zustände auf dem Bus 40 geben muss, welche von anderen Teilnehmerstationen 10, 20, 30 mit dominanten Zuständen auf dem Bus 40 überschrieben werden können. Im rezessiven Zustand herrschen an der einzelnen Teilnehmerstation 10, 20, 30 hochohmige Verhältnisse, was in Kombination mit den Parasiten der Busbeschaltung längere Zeitkonstanten zur Folge hat. Dies führt zu einer Begrenzung der maximalen Bitrate des heutigen CAN-FD-Physical-Layer auf derzeit etwa 2 Megabit pro Sekunde im realen Fahrzeug-Einsatz.

In der Datenphase 452 werden neben einem Teil des Steuerfelds 454 die Nutzdaten des CAN-FX-Rahmens bzw. der Nachricht 45 aus dem Datenfeld 455 sowie das Prüfsummenfeld 456 für die Prüfsumme F_CRC gesendet.

Ein Sender der Nachricht 45 beginnt ein Senden von Bits der Datenphase 452 auf den Bus 40 erst, wenn die Teilnehmerstation 10 als der Sender die Arbitration gewonnen hat und die Teilnehmerstation 10 als Sender damit zum Senden einen exklusiven Zugriff auf den Bus 40 des Bussystems 1 hat.

Ganz allgemein können in dem Bussystem mit CAN FX im Vergleich zu CAN oder CAN FD folgende abweichenden Eigenschaften realisiert werden:
a) Übernahme und ggf. Anpassung bewährter Eigenschaften, die für die Robustheit und Anwenderfreundlichkeit von CAN und CAN FD verantwortlich sind, insbesondere Rahmenstruktur mit Identifier und Arbitrierung nach dem CSMA/CR-Verfahren,
b) Steigerung der Netto-Datenübertragungsrate, insbesondere auf etwa 10 Megabit pro Sekunde,
c) Anheben der Größe der Nutzdaten pro Rahmen, insbesondere auf etwa 4kbyte.

Wie in Fig. 2 dargestellt, verwendet die Teilnehmerstation 10 zur Erstellung des Rahmens 450 in der Arbitrationsphase 451 als erster Kommunikationsphase teilweise, insbesondere bis zum FDF-Bit (inklusive), ein von CAN/CAN-FD bekanntes Format gemäß der ISO11898-1:2015. Somit ist der Rahmen 450 vom SOF-Bit bis einschließlich zum FDF-Bit identisch zum CAN FD Base Frame Format gemäß der ISO11898-1:2015. Daher wird der bekannte Aufbau hier nicht weiter erläutert.

Dagegen verwendet die Teilnehmerstation 10 ab dem FDF-Bit in der ersten Kommunikationsphase sowie in der zweiten Kommunikationsphase, der Datenphase 452, ein CAN FX Format, das nachfolgend beschrieben ist.

In dem Rahmen 450 folgt direkt nach dem FDF-Bit das FXF-Bit, das von der Position her dem "res Bit" im CAN FD Base Frame Format entspricht, wie zuvor erwähnt. Wird das FXF-Bit als 1, also rezessiv, gesendet, identifiziert es damit den Rahmen 450 als CAN FX-Rahmen. Für einen CAN FD Rahmen setzt die Kommunikationssteuereinrichtung 11 das FXF-Bit als 0, also dominant.

Somit wird das von CAN FD bekannte res-Bit, das nachfolgend FXF-Bit genannt ist, für die Umschaltung von dem CAN FD Format zu dem CAN FX Format genutzt. Daher sind die Rahmenformate von CAN FD und CAN FX bis zum res-Bit gleich. Eine CAN FX Teilnehmerstation, also hier die Teilnehmerstationen 10, 30, unterstützt auch CAN FD.

Allgemein werden bei der Erzeugung des Rahmens 450 zwei unterschiedliche Stuffing-Regeln angewendet. Bis zum FXF-Bit im Steuerfeld 454 gilt die dynamische Bit-Stuffing-Regel von CAN FD, so dass nach 5 gleichen Bits in Folge ein inverses Stuff-Bit einzufügen ist. Nach einem FX-Bit im Steuerfeld 454 gilt eine feste Stuffing-Regel, so dass nach einer festen Zahl von Bits ein fixed Stuff-Bit einzufügen ist. Alternativ können statt nur einem Stuff-Bit eine Anzahl von 2 oder mehr Bits als fixed Stuff-Bits eingefügt werden.

Nach dem FXF-Bit folgt in dem Rahmen 450 ein resFX-Bit, das ein dominantes Bit für die zukünftige Nutzung ist. Das resFX muss für den Rahmen 450 als 0, also dominant, gesendet werden. Empfängt die Teilnehmerstation 10 jedoch ein resFX-Bit als 1, also rezessiv, geht die empfangende Teilnehmerstation 10 beispielsweise in einen Protokollausnahmezustand (Protocol Exception State), so wie es bei einer CAN FD Nachricht 46 für ein res=1 ausgeführt wird. Das resFX-Bit könnte auch genau umgekehrt definiert sein, also, dass es als 1, also rezessiv, gesendet werden muss, so dass die empfangende Teilnehmerstation bei einem dominanten resFX-Bit in den Protokollausnahmezustand geht. In dem Protokollausnahmezustand wird der CAN FD Controller, bei dem vorliegenden Beispiel die Kommunikationssteuereinrichtung 21, in einen Betriebszustand versetzt, in dem der CAN FD Controller den CAN Bus 40 nicht beeinflusst.

Nach dem resFXF-Bit folgt in dem Rahmen 450 eine Sequenz BRS AD, in welcher eine vorbestimmte Bitsequenz codiert wird. Diese Bitsequenz erlaubt eine einfache und sichere Umschaltung von der Arbitrations-Bitrate der Arbitrationsphase 451 zu der Daten-Bitrate der Datenphase 452. Beispielsweise besteht die Bitsequenz der BRS AD aus einem rezessiven Arbitrations-Bit gefolgt von einem dominanten Daten-Bit. Bei diesem Beispiel kann die Bitrate an der Flanke zwischen den zwei genannten Bits umgeschaltet werden.

Nach der Sequenz BRS AD folgt in dem Rahmen 450 ein DT-Feld, in welchem der Datentyp (Data Type = DT) der Nutzdaten des Datenfelds 455 angegeben ist, das nachfolgend noch genauer beschrieben ist. Das DT-Feld hat eine Länge von beispielsweise 1 Byte; damit lassen sich 2⁸ = 256 verschiedene Datentypen (Data Types) definieren. Selbstverständlich ist eine andere Länge für das DT-Feld wählbar. Der Datentyp (Data Type) kennzeichnet den Inhalt des Datenfeldes 455 im Hinblick darauf, welche Art von Information im Datenfeld 455 enthalten ist. Je nach Wert im DT-Feld werden im Datenfeld 455 auch noch zusätzliche Header oder Trailer übertragen, die neben den eigentlichen Nutzdaten (User Data) vorgesehen sind. Alternativ ist das DT-Feld am Anfang des Datenfeldes 455, also z.B. im ersten Byte des Datenfeldes 455 angeordnet. Mit dem DT-Feld lassen sich Zusatzfunktionen realisieren, wie Safety (Funktionale Sicherheit), Security (Daten Sicherheit) und QoS (Quality of Service, Dienstgüte, wie beispielsweise Garantie einer maximalen Latenz für einen Rahmen, Zeitsynchronisation der Teilnehmerstationen (Knoten) in dem Bussystem, usw. Hierdurch ist das Kommunikationsprotokoll modular und damit für die Zukunft einfach erweiterbar, um zusätzliche Funktionen einzufügen, und zwar ohne das Rahmenformat ändern zu müssen. Neue Zusatzfunktionen können in alten Implementierungen mittels Software hinzugefügt werden, so dass die verschiedenen Implementierungen kompatibel bleiben. Somit wird das für das Bussystem verwendete Kommunikationsprotokoll auch sehr flexibel erweiterbar.

Nach dem DT-Feld folgt in dem Rahmen 450 ein DLC-Feld, in welchem der Datenlängencode (DLC = Data Length Code) eingefügt wird, welcher die Anzahl der Bytes im Datenfeld 455 des Rahmens 450 angibt. Der Datenlängencode (DLC) kann jeden Wert von 1 bis zur maximalen Länge des Datenfelds 455 bzw. Datenfeldlänge annehmen. Beträgt die maximale Datenfeldlänge insbesondere 2048 Bit, benötigt der Datenlängencode (DLC) eine Anzahl von 11 Bits unter den Annahmen, dass DLC = 0 eine Datenfeldlänge mit einer Anzahl von 1 Byte bedeutet und DLC = 2047 eine Datenfeldlänge mit einer Anzahl von 2048 Byte Datenfeldlänge bedeutet. Alternativ könnte ein Datenfeld 455 der Länge 0 erlaubt sein, wie beispielsweise bei CAN. Hierbei würde DLC = 0 beispielsweise die Datenfeldlänge mit der Anzahl von 0 Bytes codieren. Die maximale codierbare Datenfeldlänge ist mit beispielsweise 11 Bit dann (2^11)-1 = 2047.

Nach dem DLC-Feld folgt in dem Rahmen 450 eine Kopfprüfsumme H_CRC. Die Kopfprüfsumme ist eine Prüfsumme zur Absicherung des Kopfes (Headers) des Rahmens 450, das heißt aller Bits vom Beginn des Rahmens 450 mit dem SOF-Bit bis zum Beginn der Kopfprüfsumme H_CRC, inklusive aller dynamischen und optional der fixed Stuff-Bits bis zum Beginn der Kopfprüfsumme H_CRC. Die Länge der Kopfprüfsumme H_CRC und damit des Prüfsummen-Polynoms gemäß der zyklischen Redundanzprüfung (CRC) ist entsprechend der gewünschten Hamming-Distanz zu wählen. Das von der Kopfprüfsumme H_CRC abzusichernde Datenwort ist bei einem Datenlängencode (DLC) von 11 Bit länger als 27 Bit. Daher muss das Polynom der Kopfprüfsumme H_CRC, um eine Hamming-Distanz von 6 zu erreichen, mindestens 13 Bit lang sein. Die Berechnung der Kopfprüfsumme H_CRC wird nachfolgend noch genauer beschrieben.

Nach der Kopfprüfsumme H_CRC folgt in dem Rahmen 450 das Datenfeld 455 (Data Field). Das Datenfeld 455 besteht aus 1 bis n Daten-Bytes, wobei n beispielsweise 2048 Byte oder 4096 Byte oder ein beliebiger anderer Wert ist. Alternativ ist eine Datenfeldlänge von 0 denkbar. Die Länge des Datenfelds 455 ist in dem DLC-Feld codiert, wie zuvor beschrieben. Wie zuvor beschrieben, ist optional das DT-Feld am Anfang des Datenfeldes 455, also z.B. im ersten Byte des Datenfeldes 455 angeordnet.

Nach dem Datenfeld 455 folgt in dem Rahmen 450 eine Rahmenprüfsumme F_CRC. Die Rahmenprüfsumme F_CRC besteht aus den Bits der Rahmenprüfsumme F_CRC. Die Länge der Rahmenprüfsumme F_CRC und damit des CRC Polynoms ist entsprechend der gewünschten Hamming-Distanz zu wählen. Die Rahmenprüfsumme F_CRC sichert den gesamten Rahmen 450 ab. Alternativ ist optional nur das Datenfeld 455 mit der Rahmenprüfsumme F_CRC abgesichert.

Nach der Rahmenprüfsumme F_CRC folgt in dem Rahmen 450 eine Sequenz BRS DA, in welcher eine vorbestimmte Bitsequenz codiert wird. Diese Bitsequenz erlaubt eine einfache und sichere Umschaltung von der Daten-Bitrate der Datenphase 452 zu der Arbitrations-Bitrate der Arbitrationsphase 451. Beispielsweise besteht die Bitsequenz der BRS DA aus einem rezessiven Daten-Bit, gefolgt von einem dominanten Arbitrations-Bit. Bei diesem Beispiel kann an der Flanke zwischen den zwei genannten Bits die Bitrate umgeschaltet werden.

Nach der Sequenz BRS DA folgt in dem Rahmen 450 ein Sync-Feld, in dem ein Synchronisationsmuster (Sync Pattern) vorgehalten ist. Das Synchronisationsmuster ist ein Bitmuster, das einer empfangenden Teilnehmerstation 10, 30 erlaubt, den Beginn der Arbitrationsphase 451 nach der Datenphase 452 zu erkennen. Das Synchronisationsmuster erlaubt empfangenden Teilnehmerstationen 10, 30, die beispielsweise aufgrund einer falschen Kopfprüfsumme H_CRC die korrekte Länge des Datenfelds 455 nicht kennen, sich aufzusynchronisieren. Anschließend können diese Teilnehmerstationen ein "Negativ Acknowledge" senden, um den fehlerhaften Empfang mitzuteilen. Dies ist insbesondere dann sehr wichtig, wenn CAN FX im Datenfeld 455 keine Fehlerrahmen 47 (Error Flags) mehr erlaubt.

Nach dem Sync-Feld folgt in dem Rahmen 450 ein Bestätigungsfeld (ACK Field), das aus mehreren Bits besteht, nämlich bei dem Beispiel von Fig. 2 einem ACK-Bit, einem ACK-dlm-Bit, einem NACK-Bit und einem NACK-dlm-Bit Bit. Das NACK-Bit und das NACK-dlm-Bit sind optionale Bits. Das ACK-Bit senden die empfangenden Teilnehmerstation 10, 30 als dominant, wenn sie einen Rahmen 450 korrekt empfangen haben. Die sendende Teilnehmerstation sendet das ACK-Bit als rezessiv. Daher kann das ursprünglich in dem Rahmen 450 auf den Bus 40 gesendete Bit von den empfangenden Teilnehmerstationen 10, 30 überschrieben werden. Das ACK-dlm-Bit wird als ein rezessives Bit gesendet, welches zur Abtrennung zu anderen Feldern dient. Das NACK-Bit und das NACK-dlm Bit dienen dazu, dass eine empfangende Teilnehmerstation einen nicht korrekten Empfang des Rahmens 450 auf dem Bus 40 signalisieren kann. Die Funktion der Bits ist wie die des ACK-Bits und des ACK-dlm-Bits.

Nach dem Bestätigungsfeld (ACK Field) folgt in dem Rahmen 450 ein Endefeld (EOF = End of Frame). Die Bitsequenz des Endefelds (EOF) dient dazu, das Ende des Rahmens 450 zu kennzeichnen. Das Endefeld (EOF) sorgt dafür, dass am Ende des Rahmens 450 eine Anzahl von 8 rezessiven Bits gesendet wird. Das ist eine Bitfolge, die innerhalb des Rahmens 450 nicht auftreten kann. Dadurch kann von den Teilnehmerstationen 10, 20, 30 das Ende des Rahmens 450 sicher erkannt werden.

Das Endefeld (EOF) hat eine Länge, die abhängig davon unterschiedlich ist, ob im NACK-Bit ein dominantes Bit oder ein rezessives Bit gesehen wurde. Wenn die sendende Teilnehmerstation das NACK-Bit als dominant empfangen hat, dann hat das Endefeld (EOF) eine Anzahl von 7 rezessiven Bits. Ansonsten ist das Endefeld (EOF) nur 5 rezessive Bits lang.

Nach dem Endefeld (EOF) folgt in bzw. nach dem Rahmen 450 ein Zwischenrahmenabstand (IFS - Inter Frame Space). Dieser Zwischenrahmenabstand (IFS) ist ausgestaltet wie bei CAN FD entsprechend der ISO11898-1:2015. Der Zwischenrahmenabstand (IFS) beträgt minimal 3 Bits.

Fig. 2 gibt ein spezielles Beispiel für die Reihenfolge der Unterteilungen des Headers für den Rahmen 450 an. Alternativ ist die Reihenfolge der Unterteilungen des Headers anders sortierbar. Zum Beispiel kann das DLC-Feld vor dem DT-Feld angeordnet sein.

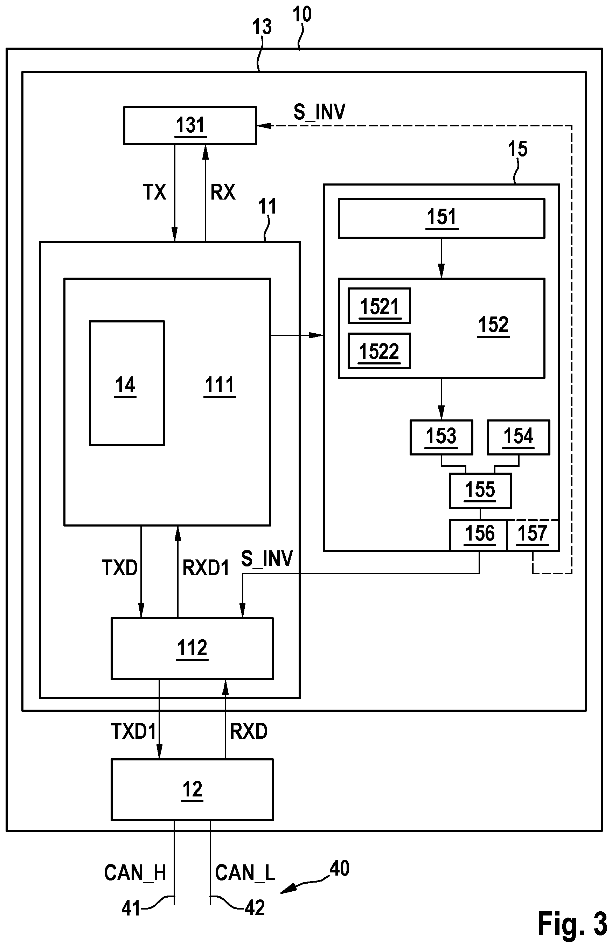

Fig. 3 zeigt den grundlegenden Aufbau der Teilnehmerstation 10 mit der Kommunikationssteuereinrichtung 11, der Sende-/Empfangseinrichtung 12, einem Mikrocontroller 13, dem Kommunikationsfehler-Erkennungsmodul 14 und der Fehlererkennung-Testeinrichtung 15. Das Kommunikationsfehler-Erkennungsmodul 14 ist Teil der Kommunikationssteuereinrichtung 11, genauer gesagt ihres Protokoll-Steuerwerks 111, das auch als Protokoll-Controller bezeichnet werden kann. Die Kommunikationssteuereinrichtung 11 und die Fehlererkennung-Testeinrichtung 15 sind Teil des Mikrocontrollers 13.

Die Teilnehmerstationen 20, 30 sind in ähnlicher Weise aufgebaut, wie in Fig. 3 gezeigt, jedoch sind die Fehlererkennung-Testeinrichtungen 25, 35 gemäß Fig. 1 nur optional vorhanden. Optional ist alternativ oder zusätzlich möglich, dass das Kommunikationsfehler-Erkennungsmodul 14 separat von der Kommunikationssteuereinrichtung 31 und der Sende-/Empfangseinrichtung 32 angeordnet ist. Dasselbe gilt für die Teilnehmerstation 20. Daher werden die Teilnehmerstationen 20, 30 nicht separat beschrieben.

Gemäß Fig. 3 ist die Kommunikationssteuereinrichtung 11 dem Mikrocontroller 13 zugeordnet. Der Mikrocontroller 13 hat eine zentrale Verarbeitungseinheit (Central Processing Unit = CPU) 131. Zusätzlich ist in den Mikrocontroller 13 üblicherweise eine nicht dargestellte Energieversorgungseinrichtung eingebaut, welche die Sende-/Empfangseinrichtung 12 mit elektrischer Energie versorgt. Die Energieversorgungseinrichtung liefert üblicherweise eine Spannung CAN_Supply von 5 V. Je nach Bedarf kann die Energieversorgungseinrichtung jedoch eine andere Spannung mit einem anderen Wert liefern. Zusätzlich oder alternativ kann die Energieversorgungseinrichtung als Stromquelle ausgestaltet sein. Zusätzlich ist üblicherweise mindestens ein Speicher vorhanden, welchen die zentrale Verarbeitungseinheit 131 bei der Verarbeitung von Daten nutzt.

Die Kommunikationssteuereinrichtung 11 ist für die Implementierung der CAN FX-Funktionen zuständig, die zuvor in Bezug auf den Rahmen 450 von Fig. 2 erläutert sind. Außerdem kann die Kommunikationssteuereinrichtung 11 die Implementierung der CAN FD-Funktionen realisieren, wie zuvor beschrieben. Die Kommunikationssteuereinrichtung 11 hat zusätzlich zu dem Protokoll-Steuerwerk 111 ein Logikmodul 112.

Die in Fig. 3 gezeigte Sende-/Empfangseinrichtung 12 hat ein nicht dargestelltes Sendemodul und ein Empfangsmodul. Auch wenn nachfolgend immer von der Sende-/Empfangseinrichtung 12 gesprochen ist, ist es alternativ möglich, das Empfangsmodul in einer separaten Einrichtung extern von dem Sendemodul vorzusehen. Das Sendemodul und das Empfangsmodul können wie bei einer herkömmlichen Sende-/Empfangseinrichtung 22 aufgebaut sein.

Die Sende-/Empfangseinrichtung 12 ist an den Bus 40 angeschlossen, genauer gesagt dessen erste Busader 41 für CAN_H oder CAN-FX_H und dessen zweite Busader 42 für CAN_L oder CAN-FX_L.

Im Betrieb des Bussystems 1 setzt das Sendemodul der Sende-/Empfangseinrichtung 12 ein Sendesignal TXD oder TXD1 der Kommunikationssteuereinrichtung 11 in entsprechende Signale CAN_H und CAN_L oder CAN-FX_H und CAN-FX_L für die Busadern 41, 42 um und sendet diese Signale CAN_H und CAN_L oder CAN-FX_H und CAN-FX_L an den Anschlüssen für CAN_H und CAN_L auf den Bus 40. Die Sende-/Empfangseinrichtung 12 implementiert die Schicht 1 des bekannten OSI-Modells, das heißt die Sende-/Empfangseinrichtung 12 codiert die einzelnen zu sendenden Bits physikalisch auf dem Bus 40, beispielsweise als eine Differenzspannung VDIFF = CAN_H - CAN_L oder VDIFF = CAN-FX_H - CAN-FX_L.

Der Empfänger der Sende-/Empfangseinrichtung 12 bildet aus von Bus 40 empfangenen CAN-Signalen ein Empfangssignal RXD und gibt dieses an die Kommunikationssteuereinrichtung 11 weiter. Mit Ausnahme eines Leerlauf- oder Bereitschaftszustands (Idle oder Standby), hört die Sende-/Empfangseinrichtung 12 mit dem Empfänger im Normalbetrieb immer auf eine Übertragung von Daten bzw. Nachrichten 45, 46 auf dem Bus 40 und zwar unabhängig davon, ob die Teilnehmerstation 10 bzw. ihre Sende-/Empfangseinrichtung 12 Sender der Nachricht 45 ist oder nicht.

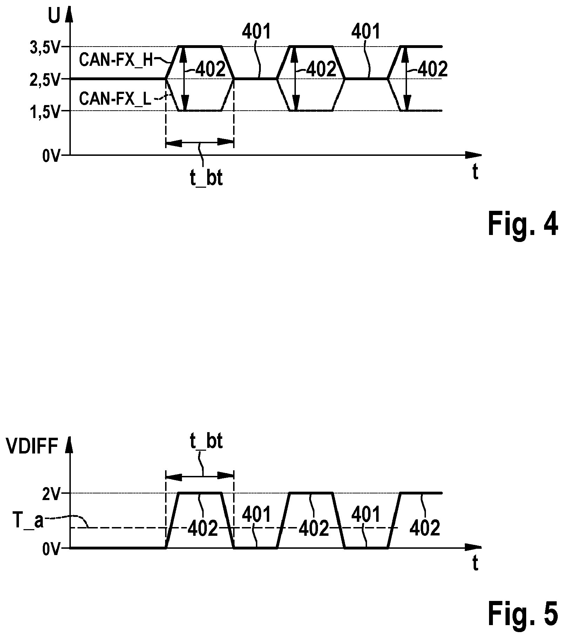

Gemäß dem Beispiel von Fig. 4 haben die Signale CAN-FX_H und CAN-FX_L zumindest in der Arbitrationsphase 451 die dominanten und rezessiven Buspegel 401, 402, wie von CAN bekannt. Auf dem Bus 40 bildet sich ein Differenzsignal VDIFF = CAN-FX_H - CAN-FX_L aus, das in Fig. 5 gezeigt ist. Die einzelnen Bits des Signals VDIFF mit der Bitzeit t_bt können mit einer Empfangsschwelle T_a von 0,7 V erkannt werden. In der Datenphase 452 werden die Bits der Signale CAN-FX_H und CAN-FX_L schneller, also mit einer kürzeren Bitzeit t_bt, gesendet als in der Arbitrationsphase 451. Somit unterscheiden sich die Signale CAN-FX_H und CAN-FX_L in der Datenphase 452 zumindest in deren höheren Bitrate von den herkömmlichen Signalen CAN_H und CAN_L. Die Bitzeit t_bt von Bit des Sendesignals TXD oder TXD1 entspricht den jeweiligen Bits für die Arbitrationsphase 451 und den Bits für die Datenphase 452.

Die Abfolge der Zustände 401, 402 für die Signale CAN-FX_H, CAN-FX_L in Fig. 4 und der daraus resultierende Verlauf der Spannung VDIFF von Fig. 5 dient nur der Veranschaulichung der Funktion der Teilnehmerstation 10 für das Senden eines Rahmens 450. Die Abfolge der Datenzustände für die Buszustände 401, 402 ist je nach Bedarf wählbar.

Mit anderen Worten erzeugt das Sendemodul der Sende-/Empfangseinrichtung 12 in einer ersten Betriebsart gemäß Fig. 4 einen ersten Datenzustand als Buszustand 402 mit unterschiedlichen Buspegeln für zwei Busadern 41, 42 der Busleitung und einen zweiten Datenzustand als Buszustand 401 mit demselben Buspegel für die zwei Busadern 41, 42 der Busleitung des Busses 40.

Außerdem sendet das Sendemodul der Sende-/Empfangseinrichtung 12, für die zeitlichen Verläufe der Signale CAN-FX_H, CAN-FX_L in einer zweiten Betriebsart, welche die Datenphase 452 umfasst, die Bits mit einer höheren Bitrate auf den Bus 40. Die CAN-FX_H und CAN-FX_L Signale können in der Datenphase 452 zudem mit einem anderen Physical Layer als bei CAN FD erzeugt werden. Dadurch kann die Bitrate in der Datenphase 452 noch weiter erhöht werden als bei CAN FD.

Im Betrieb der Teilnehmerstation 10 empfängt das Protokoll-Steuerwerk 111 von dem Mikrocontroller 13, genauer gesagt seiner zentralen Verarbeitungseinheit 131, ein Sendenachricht TX, wenn die Teilnehmerstation 10 Daten auf den Bus 40 senden möchte. Die Sendenachricht TX enthält Daten, die über den Bus 40, insbesondere in einem Rahmen 450 oder einem Rahmen für CAN FD an eine andere Teilnehmerstation 10, 20, 30 des Bussystems 1 zu senden sind. Zudem sendet das Protokoll-Steuerwerk 111 an den Mikrocontroller 13 eine Empfangsnachricht RX, wenn von der Sende-/Empfangseinrichtung 12 von dem Bus 40 ein Rahmen empfangen wird und von der Sende-/Empfangseinrichtung 12 als Empfangssignal RXD umgewandelt wird. Die Empfangsnachricht RX wird genauer gesagt an die zentrale Verarbeitungseinheit 131 gesendet. Die Empfangsnachricht RX enthält Daten, die von einer anderen Teilnehmerstation 10, 20, 30 des Bussystems 1 über den Bus 40, insbesondere in einem Rahmen 450 oder einem sonstigen Rahmen, gesendet wurden und von der Teilnehmerstation, genauer gesagt ihrer Sende-/Empfangseinrichtung 12, empfangen wurden.

Das Protokoll-Steuerwerk 111 setzt die Daten der Sendenachricht TX mit zusätzlichen Steuer- und Prüfbits zusammen, die von dem Kommunikationsprotokoll für die serielle Übertragung auf dem Bus 40 definiert sind, wie zuvor in Bezug auf Fig. 2 für den Rahmen 450 als Beispiel beschrieben. Das so gebildete TXD-Signal, das auch Senderahmen oder Rahmen genannt wird, verwendet für einen Rahmen für den Bus 40 mindestens eine Prüfsumme, die von dem Kommunikationsfehler-Erkennungsmodul 14 berechnet wird. Die mindestens eine Prüfsumme umfasst die zuvor in Bezug auf den Rahmen 450 beschriebene Rahmenprüfsumme F_CRC und/oder die zuvor beschriebene Kopfprüfsumme H_CRC und/oder mindestens eine sonstige Prüfsumme. Die Berechnung der mindestens einen Prüfsumme kann prinzipiell alternativ oder zusätzlich in Software implementiert werden, die auf der zentralen Verarbeitungseinheit 131 des Mikrocontrollers 13 ausgeführt wird. Dagegen extrahiert das Protokoll-Steuerwerk 111 aus einem empfangenen RXD-Signal die Steuer- und Prüfbits, die von dem Kommunikationsprotokoll für die serielle Übertragung auf dem Bus 40 definiert sind. Die resultierende Empfangsnachricht RX gibt das Protokoll-Steuerwerk 111 an den Mikrocontroller 13 weiter.

Zudem gibt das Protokoll-Steuerwerk 111 an die Fehlererkennung-Testeinrichtung 15, genauer gesagt an ihren ersten Anschluss 1521 und oder zweiten Anschluss 1522, Informationen über das Sendesignal TXD aus. Derartige Informationen sind beispielsweise eine Meldung, wann das Protokoll-Steuerwerk 111 anfängt, einen Rahmen 450 oder einen sonstigen Rahmen für den Bus 40 zu senden (Send_Start). Zusätzlich oder alternativ sind derartige Informationen eine Signalisierung mittels eines Pulses oder einer Flanke pro gesendetem Bit des Sendesignals TXD bzw. des Rahmens 450 (Bit-Puls). Dagegen signalisiert die Fehlererkennung-Testeinrichtung 15 dem Protokoll-Steuerwerk 111 mit einem Schaltsignal S_INV, wann ein Bit des Sendesignals TXD bzw. des Rahmens 450 gestört werden soll (Invert-Bit). Die Signalisierung kann insbesondere mittels eines dritten Anschlusses 156 der Einrichtung 15 erfolgen. Dies ist nachfolgend genauer beschrieben.

Die Fehlererkennung-Testeinrichtung 15 hat mindestens ein Konfigurationsregister 151, mindestens einen Zähler 152, ein Auswertemodul 153, ein Steuermodul 154, ein Logikmodul 155, einen Ausgangsanschluss 156 und optional einen zusätzlichen Ausgangsanschluss 157.

Der Wertebereich des mindestens einen Zählers 152 sollte mindestens so groß sein, dass die Bits des längsten möglichen Rahmens 450 oder eines sonstigen über den Bus 40 übertragenen längsten möglichen Rahmens gezählt werden können. Das mindestens eine Konfigurationsregister 151 sollte genauso breit sein, wie der mindestens eine Zähler 152. Das Auswertemodul 153 prüft, ob der mindestens eine Zähler 152 einen vorbestimmten Zählerwert hat. Das Steuermodul 154 kann als Steuerlogik ausgestaltet sein. Mit dem Steuermodul 154 ist die Fehlererkennung-Testeinrichtung 15 ein- oder ausschaltbar.

Das Auswertemodul 153 kann zudem eine Software aufweisen, die bestimmt, insbesondere errechnet, welches Bit eines vorbestimmten Sendesignals TXD (der Testrahmen) invertiert werden muss, damit die Empfänger des gestörten Testrahmens die Funktion eines vorbestimmten und bereits zuvor beschriebenen Fehler-Erkennungs-Mechanismus prüfen können. Die Software kann jedoch alternativ oder zusätzlich extern von dem Auswertemodul 153 bereitgestellt sein, beispielsweise auf einem externen Computer (PC). Die Bestimmung des mindestens einen Bits mit der Software kann im letzteren Beispiel offline in einem Software-Werkzeug (Tool) auf dem PC erfolgen. Unabhängig davon erstellt die Software eine Liste von Prüfnachrichten (Prüfmessages) mit Prüfbit-Positionen. Die Liste wird einmal von einer Software ermittelt und als Liste von Testrahmen generiert, einschließlich Fehler-Bit-Positionen.

Im laufenden Betrieb wird der von der Software bestimmte bzw. errechnete Wert dann in das mindestens eine Konfigurationsregister 151 geschrieben, insbesondere holt dann die zentrale Verarbeitungseinheit 131 Prüfnachrichten aus der Liste und schreibt die dazugehörige Prüfbit-Position in das Konfigurations-Register 151. Hierbei wird, je nach gewünschter Fehlerbedingung bzw. zu prüfendem Fehlermechanismus, eine passende Prüfnachricht aus der Liste ausgewählt. Die Prüfnachricht wird an das Protokoll-Steuerwerk 111 weitergegeben, um aus der Prüfnachricht den entsprechenden Rahmen zu erzeugen. Die entsprechende Fehler-Bit-Position wird in das mindestens eine Konfigurationsregister 151 geschrieben. Außerdem wird die Fehlererkennung-Testeinrichtung 15 kurz vor dem Sendestart des Testrahmens bzw. des vorbestimmten Sendesignals TXD eingeschaltet. Spätestens bei einem Signal (Send_Start) des Steuerwerks 111 kann der Wert des mindestens einen Konfigurationsregisters 151 in den mindestens einen Zähler 152 geschrieben werden. Die Signalisierung mittels eines Pulses oder einer Flanke pro gesendetem Bit des Sendesignals TXD bzw. des Rahmens 450 (Bit-Puls) bewirkt das Inkrementieren des mindestens einen Zählers 152, falls der Zähler ein Aufwärtszähler ist, oder das Dekrementieren des mindestens einen Zählers 152, falls der Zähler ein Abwärtszähler ist.

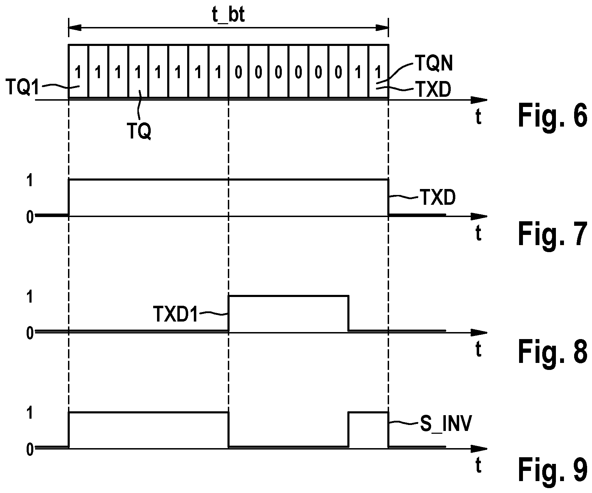

Das Schaltsignal S_INV, das ein bestimmtes Bit in dem Testrahmen bzw. dem vorbestimmten Sendesignal TXD stören kann, ist nur eine Bitzeit t_bt lang aktiv, die beispielsweise in jeder der Fig. 4 bis Fig. 6 gezeigt ist. Die Bitzeit t_bt ist bei Bedarf in mindestens zwei Zeitquanten TQ1 bis TQN unterteilbar, wie in Fig. 6 gezeigt, wobei N eine beliebige natürliche Zahl > 1 ist.

Im einfachsten Fall wird der mindestens eine Zähler 152 von Fig. 3 bei dem Sendestart des TXD-Signals für einen Rahmen 450 oder einen sonstigen über den Bus 40 zu sendenden Rahmen mit dem Inhalt des mindestens einen Konfigurationsregisters 151 geladen. Der mindestens eine Zähler 152 wird dann einmal pro gesendetem Bit dekrementiert. Wenn der mindestens eine Zähler 152 den Zählerwert 0 erreicht, aktiviert das Auswertemodul 153 das Schaltsignal S_INV und gibt das Schaltsignal S_INV über das Logikmodul 155 und den Anschluss 156 an das Logikmodul 112 weiter. Dadurch wird das aktuell gesendete Bit des Sendesignals TXD invertiert. Das Logikmodul 155 kann beispielsweise als UND-Gatter ausgeführt sein.

Gibt es mehr als ein Konfigurationsregister 151, um beispielsweise mehrere Bitfehler pro Rahmen bzw. in das vorbestimmte Sendesignal TXD einzuprägen, wird der mindestens eine Zähler 152 mit dem Zählerwert 0 geladen und dann pro gesendetem Bit des vorbestimmten Sendesignals TXD einmal inkrementiert. Das Auswertemodul 153 ist derart ausgestaltet, das Schaltsignal S_INV dann zu aktivieren, um das Bit des Sendesignals TXD zu invertieren, wenn der mindestens eine Zähler 152 den Wert eines der Konfigurationsregister 151 annimmt.

Somit kann das Schaltsignal S_INV in der Kommunikationssteuereinrichtung 11, optional in dem Protokoll-Steuerwerk 111, den seriellen Dateneingang des Ausgangs-Anschluss-Treibers der Kommunikationssteuereinrichtung 11 invertieren. Das Invertieren kann insbesondere mittels des Logikmoduls 112 erfolgen, das beispielsweise als EXOR-Gatter ausgestaltet ist. Das Logikmodul 112 wird von der Fehlererkennung-Testeinrichtung 15 zeitlich derart aktiviert, dass ein bestimmtes, ausgewähltes Bit des aktuell gesendeten Sendesignals TXD von beispielsweise Fig. 6 für einen Rahmen 450 oder einen sonstigen Rahmen invertiert wird. Die Fehlererkennung-Testeinrichtung 15 arbeitet parallel zu dem Protokoll-Steuerwerk 111.

Bei dem Beispiel von Fig. 6 oder Fig. 7 lautet somit die Bitfolge des Sendesignals TXD nach Aktivieren des Schaltsignals S_INV, wie zuvor beschrieben, nicht mehr 010, sondern 000. Sonstige Änderungen in dem Protokoll-Steuerwerk 111 sind nicht notwendig, um die Fehlermechanismen des Bussystems 1 zu testen.

Das Logikmodul 112 gibt somit ein modifiziertes oder gestörtes Sendesignal TXD1 an die Sende-Empfangseinrichtung 12 aus.

Um das Risiko zu minimieren, mit der Fehlererkennung-Testeinrichtung 15 versehentlich Bitfehler einzuprägen, kann sich die Fehlererkennung-Testeinrichtung 15 selbsttätig abschalten, nachdem die Fehlererkennung-Testeinrichtung 15 den Testrahmen bzw. das vorbestimmte Sendesignal TXD mit dem Invertieren mindestens eines Bits gestört hat, wie zuvor beschrieben.

Die Signale von dem Protokoll-Steuerwerk 111 zu der Fehlererkennung-Testeinrichtung 15 sind in dem Protokoll-Steuerwerk 111 ohnehin vorhanden. Daher ist der Aufwand für die zuvor beschriebene Signalisierung sehr gering.

Das hier beschriebene Verfahren ist besonders gut geeignet für Kommunikationsprotokolle, in denen die Bitrate während des Sendens eines Rahmens umgeschaltet wird, wie beispielsweise bei CAN FD oder dessen Nachfolge-Protokoll(en), weil die Bit-Grenzen direkt von dem Protokoll-Steuerwerk 111 signalisiert werden, ohne dass die Fehlererkennung-Testeinrichtung 15 die Bitraten oder den Umschaltzeitpunkt zwischen den Bitraten kennen muss. Das zuvor beschriebene Verfahren ist jedoch auch bei anderen Kommunikationsprotokollen, insbesondere CAN oder Ethernet, oder einem sonstigen seriellen Kommunikationsprotokoll usw., bei denen die Bitrate während des Sendens eines Rahmens nicht umgeschaltet wird.

Die einfache Kommunikations-Schnittstelle zwischen der Fehlererkennung-Testeinrichtung 15 und dem Protokoll-Steuerwerk 111 ermöglicht es auch, ohne großen Änderungsaufwand verschiedene Versionen der Kommunikations-Schnittstelle anzubieten. Eine Version kann gar keine Fehlererkennung-Testeinrichtung 15 aufweisen. Andere Versionen können sich in der Version der Fehlererkennung-Testeinrichtung 15 unterscheiden.

Ein großer Vorteil der zuvor beschriebenen Konfiguration der Teilnehmerstation 10 ist, dass das Protokoll-Steuerwerk 111, das Rahmen 450 oder sonstige Rahmen für den Bus 40 generiert oder decodiert, nicht mit zusätzlichen Funktionen zu erweitern ist. Derartige Funktionen könnten, wenn ein per Konfiguration vorgegebener Zustand erreicht wird, ein per Konfiguration vorgegebenes Bit des generierten Rahmens invertieren. Eine derartige Erweiterung des Protokoll-Steuerwerks 111 würde, abgesehen von dem gesteigerten Aufwand für die Verifikation des Steuerwerks 111, auch die digitale Schaltung des Steuerwerks 111 wesentlich vergrößern, was nachteilig ist. Grund dafür ist, dass dann in jedem Zustand von dem Steuerwerk 111 auch die Konfiguration der Funktionen der Einrichtung 15 berücksichtigt werden müssen. Dadurch würde auch das Risiko unerkannter Design-Fehler des Steuerwerks 111 steigen. Diese Nachteile können durch die beschriebene Konfiguration der Teilnehmerstation 10 mit der Testeinrichtung 15 vermieden werden.

Gemäß einer ersten Modifikation des vorliegenden Ausführungsbeispiels ist die Teilnehmerstation 10 zudem ausgestaltet, die Fehlererkennung-Testeinrichtung 15 zusätzlich oder alternativ auf das Empfangssignal RXD1 anzuwenden.

Wird die Funktion der Fehlererkennung-Testeinrichtung 15 auf das Empfangssignal RXD1 angewendet, kann die Teilnehmerstation 10 einen Test lokal durchführen, also einen Bitfehler einprägen, den nur die Teilnehmerstation 10 sieht. Der Vorteil liegt darin, dass die Flexibilität der Einsatzmöglichkeit erhöht wird. Für die maximale Flexibilität sollte eine Fehlererkennung-Testeinrichtung 15 für das TX-Signal und eine Fehlererkennung-Testeinrichtung 15 für das RX-Signal eingesetzt werden.

Gemäß einer zweiten Modifikation des vorliegenden Ausführungsbeispiels ist ein Empfangspuffer, der die vom CAN Protokoll-Steuerwerk empfangenen Nachrichten speichert, auch in der Lage oder ausgestaltet, Nachrichten 45, 46 zu speichern, die vom Protokoll-Steuerwerk 111 als fehlerhaft gekennzeichnet werden. Damit ist eine Auswertung einer Nachricht 45, 46 in Software möglich und bietet damit mehr Flexibilität bei der Fehlerbehandlung.

Gemäß einer dritten Modifikation des vorliegenden Ausführungsbeispiels erfolgt die Störung (Invertierung) des TXD Signals alternativ außerhalb des Protokoll-Steuerwerks 111. In diesem Fall ist das Logik-Modul 112 beispielsweise separat von der Kommunikationssteuereinrichtung 11 angeordnet. Insbesondere ist das Logik-Modul 112 separat zwischen den Einrichtungen 11, 12 angeordnet. Alternativ ist das Logik-Modul 112 in der Einrichtung 12 angeordnet.

Gemäß einer vierten Modifikation des vorliegenden Ausführungsbeispiels ist die Fehlererkennung-Testeinrichtung 15 ausgestaltet, der zentralen Verarbeitungseinrichtung 131 (CPU) zu signalisieren, dass ein Bit gestört wurde. Hierfür kann das Schaltsignal S_INV als Interrupt-Quelle für die Einrichtung 131 (CPU) bereitgestellt werden, insbesondere an einem optionalen zusätzlichen Anschluss 157 der Fehlererkennung-Testeinrichtung 15. Damit absichtliche Störungen nicht per Interrupt signalisiert werden, sollte mit der Aktivierung (Enable) der Fehlererkennung-Testeinrichtung 15 die Interrupt-Funktion so lange deaktiviert werden, bis das Bit im oder nach dem Testrahmen gestört wurde. Dadurch wird dann die Funktion der Fehlererkennung-Testeinrichtung 15 überwacht, indem eine nicht beabsichtigte Störung des Sendesignals ein Unterbrechungssignal (Interrupt) auslöst.

Fig. 6 und Fig. 7 sind auch für die Erläuterung des Sendesignals von Fig. 8 hilfreich, das von einem Schaltsignal von Fig. 9 gemäß einem zweiten Ausführungsbeispiel gestört ist, wie nachfolgend erläutert.

Wie bereits zuvor erwähnt, kann eine Bitzeit t_bt in mindestens zwei Zeitquanten TQ, also Zeitquanten TQ1 bis TQN unterteilt werden, wie in Fig. 6 gezeigt ist, wobei N eine beliebige natürliche Zahl > 1 ist. Beim CAN Protokoll ist ein Bit als ganzzahliges Vielfaches N eines Zeitquantums TQ konfigurierbar. Ein Zeitquantum TQ entspricht der zeitlichen Auflösung, mit der das Protokoll-Steuerwerk 111 arbeitet.

Daher ist die Fehlererkennung-Testeinrichtung 15 gemäß dem vorliegenden Ausführungsbeispiel in der Lage, nicht nur das Stören (Invertieren) ganzer Bits, sondern auch das Stören (Invertieren) von Teilen von Bits zu steuern. Hierfür ist auch in der Fehlererkennung-Testeinrichtung 15 die Zahl N der Zeitquanten TQ pro Bit bekannt, mit denen das Steuerwerk 111 arbeitet. Dies kann per Konfiguration von beispielsweise dem Steuermodul 154 und/oder dem Auswertemodul 153 erfolgen. Alternativ wird die Zahl N der Zeitquanten TQ pro Bit vom Protokoll-Steuerwerk 111 per Status-Signal am ersten Anschluss 1521 bereitgestellt. Außerdem kann in mindestens einem der Konfigurationsregister 151 die Information bereitgestellt werden, welches oder welche Zeitquanten TQ des Bits gestört (invertiert) werden sollen.

Ist also die Fehlererkennung-Testeinrichtung 15 aktiviert (enabled), so wartet die Fehlererkennung-Testeinrichtung 15 auf das zu störende Bit und innerhalb des Bits erzeugt es für jedes Zeitquantum TQ das passende Schaltsignal S_INV (Invert-Signal). Optional kann somit die Fehlererkennung-Testeinrichtung 15 der zentralen Verarbeitungseinrichtung 131 (CPU) signalisieren, dass ein Bit oder ein Zeitquantum TQ eines Bits gestört wurde. Hierfür kann das Schaltsignal S_INV als Interrupt-Quelle für die Einrichtung 131 (CPU) bereitgestellt werden, wie zuvor in Bezug auf das vorangehende Ausführungsbeispiel und dessen Modifikation beschrieben.

Bei dem Beispiel von Fig. 6 enthält die Fehlererkennung-Testeinrichtung 15 beispielsweise ein Register 151, welches für jedes Zeitquantum TQ des Bits konfiguriert, ob das Bit zu diesem Zeitquantum TQ invertiert werden soll oder nicht. Im Beispiel von Fig. 6 und Fig. 7 besteht das Bit mit dem Wert 1 aus 16 Zeitquanten TQ. Fig. 8 zeigt das resultierende gestörte Sendesignal TXD1, bei welchem alle mit 1 gekennzeichneten Zeitquanten TQ von Fig. 6 im Vergleich zu dem Sendesignal TXD von Fig. 7 invertiert sind. In Fig. 9 ist das Schaltsignal S_INV gezeigt, welches an dem Anschluss 156 ausgegeben wird, um das gestörte Sendesignal TXD1 zu erzeugen, wie zuvor beschrieben.

Die beschriebene Ausgestaltung der Fehlererkennung-Testeinrichtung 15 hat den Vorteil, dass ein Bit in der zeitlichen Auflösung von Zeitquanten TQ verfälscht werden kann. Dadurch sind auch mehr als nur einfache Bitfehler generierbar. Es kann zum Beispiel ein (leicht) gestörter Physical Layer emuliert werden, der aufgrund von Verkabelung oder von Eigenschaften und/oder Fehlern der Sende-/Empfangseinrichtung 12 gestört ist. Somit kann die Robustheit der Teilnehmerstation 10 bzw. des Bussystems 1 im Betrieb getestet werden.

Gemäß einem dritten Ausführungsbeispiel ist in einem der Konfigurationsregister 151 und/oder in dem Auswertemodul 153 der Fehlererkennung-Testeinrichtung 15 eine Rahmen ID konfigurierbar, also ein Identifizierer (ID), wie beispielsweise in Fig. 2 gezeigt.

Ist die Rahmen ID konfiguriert, wartet die Fehlererkennung-Testeinrichtung 15 oder das Auswertemodul 153 nach der Aktivierung (Enable) der Fehlererkennung-Testeinrichtung 15, bis das Protokoll-Steuerwerk 111 einen Rahmen 450 oder einen sonstigen Rahmen für den Bus 40 mit der konfigurierten Rahmen ID sendet. Nur wenn die in einem der Konfigurationsregister 151 und/oder in dem Auswertemodul 153 konfigurierte Rahmen ID zur gesendeten Rahmen ID passt, signalisiert die Fehlererkennung-Testeinrichtung 15 mit dem Schaltsignal S_INV, dass ein Bit gestört (invertiert) werden soll. Hierzu stellt das Protokoll-Steuerwerk 111 die Rahmen ID des gerade gesendeten Rahmens bereit. Diese Information, also die Rahmen ID, ist im Protokoll-Steuerwerk 111 vorhanden.

Sollen die Zeitquanten TQ des Bits unterschiedlich gestört werden, gilt Folgendes. Ist die Fehlererkennung-Testeinrichtung 15 aktiviert (enabled), so wartet die Fehlererkennung-Testeinrichtung 15 auf den Rahmen mit der passenden ID, anschließend auf das zu störende Bit und innerhalb des Bits erzeugt es für jedes Zeitquantum TQ das passende Schaltsignal S_INV, um mindestens ein Zeitquantum TQ des Bits entsprechend zu stören (invertieren).

Die Ausgestaltung der Fehlererkennung-Testeinrichtung 15 gemäß dem vorliegenden Ausführungsbeispiel hat zwei große Vorteile. Der erste Vorteil besteht darin, dass die Einrichtung 131 (CPU) und/oder ihre Software die Fehlererkennung-Testeinrichtung 15 nicht unmittelbar vor dem Senden des Testrahmens aktivieren muss, was die zeitliche Anforderung an die Software senkt. Der zweite Vorteil besteht darin, dass damit auf einfache Weise sichergestellt ist, dass wirklich nur der Testrahmen gestört wird, und nicht aus Versehen andere Rahmen.

Optional kann alternativ oder zusätzlich ein nicht dargestellter Nachrichtenbearbeiter (Message-Handler), der dem Protokoll-Steuerwerk 111 den Sendeauftrag erteilt, die Fehlererkennung-Testeinrichtung 15 aktivieren, wenn der Sendeauftrag für den Testrahmen erteilt wird. Dazu wird zum Beispiel ein Steuerbit im Speicher für den zu sendenden Testrahmen ausgewertet. Dieser Speicher kann der TX-Speicher sein.

Gemäß einem vierten Ausführungsbeispiel ist mindestens eins der Konfigurationsregister 151 und/oder das Auswertemodul 153 der Fehlererkennung-Testeinrichtung 15 konfigurierbar oder ausgestaltet, Bits nach dem Ende eines Rahmens zu stören. Dies kann zum Beispiel verwendet werden, um die Bits mit Störungen zu versehen, die in dem minimalen Zwischenrahmenabstand (IFS) gemäß Fig. 2 gesendet werden. Der Zwischenrahmenabstand (IFS) kann auch als Zwischenrahmenzeit IFS (Inter-Rahmen-Zeit) bezeichnet werden oder wird in CAN Intermission genannt.

Als Absicherung gegen Fehlfunktion kann bei dem vorliegenden Ausführungsbeispiel als Vorbedingung verlangt werden, dass ein Bit außerhalb eines Rahmens nur unmittelbar nach einem Testrahmen mit einer vorbestimmten Rahmen ID gestört werden darf. Die vorbestimmte Rahmen ID ist in mindestens einem der Konfigurationsregister 151 und/oder dem Auswertemodul 153 der Fehlererkennung-Testeinrichtung 15 konfigurierbar.

Alle zuvor beschriebenen Ausgestaltungen der Teilnehmerstationen 10, 20, 30, des Bussystems 1 und des darin ausgeführten Verfahrens können einzeln oder in allen möglichen Kombinationen Verwendung finden. Insbesondere können alle Merkmale der zuvor beschriebenen Ausführungsbeispiele und/oder deren Modifikationen beliebig kombiniert werden. Zusätzlich oder alternativ sind insbesondere folgende Modifikationen denkbar.

Die Fehlererkennung-Testeinrichtung 15, 25, 35 kann separat von der Teilnehmerstation 10, 20, 30, insbesondere ihrem Mikrocontroller 13 bereitgestellt sein.

Auch wenn die Erfindung zuvor am Beispiel des CAN-Bussystems beschrieben ist, kann die Erfindung bei jedem Kommunikationsnetzwerk und/oder Kommunikationsverfahren eingesetzt werden, bei welchem zwei verschiedene Kommunikationsphasen verwendet werden, in denen sich die Buszustände unterscheiden, die für die unterschiedlichen Kommunikationsphasen erzeugt werden. Insbesondere ist die Erfindung bei Entwicklungen von sonstigen seriellen Kommunikationsnetzwerken, wie Ethernet und/oder 100 Base-T1 Ethernet, Feldbussystemen, usw. einsetzbar.

Insbesondere kann das Bussystem 1 gemäß den Ausführungsbeispielen ein Kommunikationsnetzwerk sein, bei welchem Daten seriell mit zwei verschiedenen Bitraten übertragbar sind. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf einen gemeinsamen Kanal gewährleistet ist.

Die Anzahl und Anordnung der Teilnehmerstationen 10, 20, 30 in dem Bussystem 1 der Ausführungsbeispiele ist beliebig. Insbesondere kann die Teilnehmerstation 20 in dem Bussystem 1 entfallen. Es ist möglich, dass eine oder mehrere der Teilnehmerstationen 10 oder 30 in dem Bussystem 1 vorhanden sind. Denkbar ist, dass alle Teilnehmerstationen in dem Bussystem 1 gleich ausgestaltet sind, also nur Teilnehmerstationen 10 oder nur Teilnehmerstationen 30 vorhanden sind.

## Patentansprüche

1. Fehlererkennung-Testeinrichtung (15; 25; 35) für eine Teilnehmerstation (10; 20; 30) eines seriellen Bussystems (1), mit
einem Auswertemodul (153) zum Auswerten, welches Bit in einem Signal (TXD; RXD) gestört werden muss, damit die Empfänger des resultierenden Signals (TXD; RXD), bei dem das mindestens eine Bit gestört ist, die Funktion eines vorbestimmten Fehler-Erkennungs-Mechanismus prüfen können, wobei das Signal (TXD; RXD) im Betrieb der Teilnehmerstation (10; 20; 30) von einem Protokoll-Steuerwerk (111) einer Kommunikationssteuereinrichtung (11) der Teilnehmerstation (10; 20; 30) bearbeitet wird, um als Rahmen (450) auf einen Bus (40) des Bussystems (1) übertragen zu werden, oder um nach Empfang eines Rahmens (450) von dem Bus (40) das Signal (RXD) aus dem Rahmen (450) zu decodieren, und
mindestens einem Eingangs-Anschluss (1521; 1522) zum Empfang von Informationen zu dem Signal (TXD; RXD) von dem Protokoll-Steuerwerk (111),
mindestens einem Zähler (152) zum Zählen von Bits des Signals (TXD; RXD),
mindestens einem Konfigurationsregister (151) zur Vorgabe eines vorbestimmten Zählerwerts für den Zähler (152) nach dem Einschalten der Fehlererkennung-Testeinrichtung (15; 25; 35), und
mindestens einem Ausgangs-Anschluss (156) zur Ausgabe eines Schaltsignals (S_INV) an die Kommunikationssteuereinrichtung (11), um das von dem Auswertemodul (153) ausgewertete mindestens eine Bit in Bezug auf das von dem Protokoll-Steuerwerk (111) ausgegebene Signal (TXD; RXD) zu stören, wobei der mindestens eine Zähler (152) ausgestaltet ist, jedes Bit des Signals (TXD; RXD) auf der Grundlage der an dem mindestens einen Eingangs-Anschluss (1521, 1522) empfangenen Informationen zu zählen, und
wobei das Auswertemodul (153) ausgestaltet ist, das Schaltsignal (S_INV) auf der Grundlage des von dem Auswertemodul (153) ausgewerteten mindestens einen Bits zu erzeugen, wenn der mindestens eine Zähler (152) den Wert eines der Konfigurationsregister (151) annimmt.

2. Fehlererkennung-Testeinrichtung (15; 25; 35) nach Anspruch 1, zudem mit einem Steuermodul (154) zum Einschalten der Fehlererkennung-Testeinrichtung (15; 25; 35) kurz vor dem Start des Signals (TXD; RXD) oder zum Ausschalten der Fehlererkennung-Testeinrichtung (15; 25; 35) nach dem Ende des Signals (TXD; RXD).

3. Fehlererkennung-Testeinrichtung (15; 25; 35) nach Anspruch 1 oder 2, wobei das Auswertemodul (153) und/oder das Steuermodul (154) ausgestaltet sind/ist, zudem einen Identifizierer (ID) des Rahmens (450) und/oder ein Steuerbit in Bezug auf den zu sendenden Rahmen (450) auszuwerten, um zu bestimmen, ob die Fehlererkennung-Testeinrichtung (15; 25; 35) kurz vor dem Start des Signals (TXD; RXD) einzuschalten ist oder nicht.

4. Fehlererkennung-Testeinrichtung (15; 25; 35) nach einem der Ansprüche 1 bis 3, zudem mit
wobei der mindestens eine Ausgangs-Anschluss (156; 157) zur Signalisierung mit dem Schaltsignal (S_INV) angeordnet ist, wann mindestens ein Teil eines Bits im Signal (TXD; RXD) gestört werden soll,
wobei die Störung des Signals (TXD; RXD) einem Prüfsummenfehler und/oder einem Stuff-Fehler und/oder einem Format-Fehler entspricht.

5. Fehlererkennung-Testeinrichtung (15; 25; 35) nach einem der vorangehenden Ansprüche,
wobei das mindestens eine Konfigurationsregister (151) genauso breit ist wie der mindestens eine Zähler (152) , und
wobei der Wertebereich des mindestens einen Zählers (152) mindestens so groß ist, dass die Bits eines über den Bus (40) übertragenen längsten möglichen Rahmens (450) gezählt werden können.

6. Fehlererkennung-Testeinrichtung (15; 25; 35) nach Anspruch 4 oder 5, wobei der mindestens eine Zähler (152) ausgestaltet ist, jedes Bit des Signals (TXD; RXD) auf der Grundlage der an dem mindestens einen Eingangs-Anschluss (1521, 1522) empfangenen Informationen zu zählen und bei Erreichen des vom Konfigurationsregister (151) vorgegebenen Zählerwerts an dem Ausgangs-Anschluss (156) das Schaltsignal (S_INV) auszugeben.

7. Fehlererkennung-Testeinrichtung (15; 25; 35) nach Anspruch 3 oder 4,
wobei das Signal ein Sendesignal (TXD) ist, das in einem Rahmen (450) auf den Bus (40) zu senden ist, oder
wobei das Signal ein Empfangssignal (RXD) ist, das in einem Rahmen (450) von dem Bus (40) zu empfangen ist, oder
wobei das Signal für einen Zwischenrahmenabstand (IFS) zwischen Rahmen (450) auf dem Bus (40) erzeugt wurde.

8. Fehlererkennung-Testeinrichtung (15; 25; 35) nach einem der Ansprüche 1 bis 7, wobei sich für einen Rahmen (450), der zwischen Teilnehmerstationen (10, 20, 30) des Bussystems (1) ausgetauscht wird, die Bitzeit (t_bt) eines in der ersten Kommunikationsphase (451) auf den Bus (40) gesendeten Signals unterscheidet von einer Bitzeit (t_bt) eines in der zweiten Kommunikationsphase (452) gesendeten Signals.

9. Fehlererkennung-Testeinrichtung (15; 25; 35) nach einem der Ansprüche 1 bis 8, wobei das Auswertemodul (153) ausgestaltet ist, das Schaltsignal (S_INV) derart zu erzeugen, dass das Bit des Signals (TXD; RXD) invertiert wird.

10. Fehlererkennung-Testeinrichtung (15; 25; 35) nach einem der Ansprüche 1 bis 8,
wobei das Auswertemodul (153) ausgestaltet ist, das Schaltsignal (S_INV) derart zu erzeugen, dass mindestens ein Zeitquantum (TQ) des Bits des Signals (TXD; RXD) invertiert wird,
wobei das Bit in mindestens zwei Zeitquanten (TQ) unterteilt ist und
wobei die Fehlererkennung-Testeinrichtung (15; 25; 35) derart ausgestaltet ist, dass konfigurierbar ist, in wie viele Zeitquanten (TQ) das Bit unterteilt ist.

11. Fehlererkennung-Testeinrichtung (15; 25; 35) nach einem der vorangehenden Ansprüche, wobei der Rahmen (450) kompatibel zu CAN FD aufgebaut ist.

12. Teilnehmerstation (10; 20; 30) für ein serielles Bussystem (1), mit
mindestens einer Fehlererkennung-Testeinrichtung (15; 25; 35) nach einem der vorangehenden Ansprüche,
einer Kommunikationssteuereinrichtung (11; 21; 31) zum Steuern einer Kommunikation der Teilnehmerstation (10; 30) mit mindestens einer anderen Teilnehmerstation (10; 20; 30) des Bussystems (1), wobei die Kommunikationssteuereinrichtung (11; 21; 31) das Protokoll-Steuerwerk (111) aufweist, das ausgestaltet ist, das Signal (TXD; RXD) im Betrieb der Teilnehmerstation (10; 20; 30) zu bearbeiten, um als Rahmen (450) auf einen Bus (40) des Bussystems (1) übertragen zu werden oder nach Empfang eines Rahmens (450) von dem Bus (40) das Signal (RXD) aus dem Rahmen (450) zu decodieren, und
einer Sende-/Empfangseinrichtung (12; 32) zum Senden eines von der Kommunikationssteuereinrichtung (11; 31) erzeugten Sendesignals (TXD) als Rahmen (450) auf den Bus (40) und/oder zum Empfangen eines Rahmens (450) von dem Bus (40).

13. Teilnehmerstation (10; 20; 30) nach Anspruch 12,
zudem mit einem Logikmodul (112) zur Eingabe des von dem Protokoll-Steuerwerk (111) bearbeiteten Signals (TXD; RXD) und des Schaltsignals (S_INV) und zur Ausgabe des gestörten Signals (TXD1; RXD1), wobei das Schaltsignal (S_INV) nur für den Teil des Bits aktiv ist, der gestört werden soll, und
wobei die Sende-/Empfangseinrichtung (12; 32) ausgestaltet ist, das mit der mindestens einen Fehlererkennung-Testeinrichtung (15; 25; 35) gestörte Signal (TXD1; RXD1) zu speichern, um das gestörte Signal (TXD1; RXD1) auszuwerten.

14. Bussystem (1), mit
einem Bus (40), und
mindestens zwei Teilnehmerstationen (10; 20; 30), welche über den Bus (40) derart miteinander verbunden sind, dass sie seriell miteinander kommunizieren können und von denen mindestens eine Teilnehmerstation (10; 30) eine Teilnehmerstation (10; 30) nach Anspruch 12 oder 13 ist.

15. Verfahren zum Testen von Mechanismen zur Fehlererkennung bei einer Kommunikation in einem seriellen Bussystem (1), wobei das Verfahren mit einer Fehlererkennung-Testeinrichtung (15; 25; 35) für eine Teilnehmerstation (10; 20; 30) des Bussystems (1) ausgeführt wird, wobei die Fehlererkennung-Testeinrichtung (15; 25; 35) ein Auswertemodul (153), mindestens einen Eingangs-Anschluss (1521; 1522), mindestens einen Zähler (152), mindestens ein Konfigurationsregister (151) und mindestens einen Ausgangs-Anschluss (156) aufweist, und wobei das Verfahren die Schritte aufweist,
Vorgeben, mit dem mindestens einen Konfigurationsregister (151), eines vorbestimmten Zählerwerts für den Zähler (152) nach dem Einschalten der Fehlererkennung-Testeinrichtung (15; 25; 35),
Empfangen, mit dem mindestens einen Eingangs-Anschluss (1521; 1522), von Informationen zu dem Signal (TXD; RXD) von dem Protokoll-Steuerwerk (111),
Zählen, mit dem mindestens einen Zähler (152), von Bits des Signals (TXD; RXD),
Auswerten, mit dem Auswertemodul (153), welches Bit in einem Signal (TXD; RXD) gestört werden muss, damit die Empfänger des resultierenden Signals (TXD; RXD), bei dem das mindestens eine Bit gestört ist, die Funktion eines vorbestimmten Fehler-Erkennungs-Mechanismus prüfen können, wobei das Signal (TXD; RXD) im Betrieb der Teilnehmerstation (10; 20; 30) von einem Protokoll-Steuerwerk (111) einer Kommunikationssteuereinrichtung (11) der Teilnehmerstation (10; 20; 30) bearbeitet wird, um als Rahmen (450) auf einen Bus (40) des Bussystems (1) übertragen zu werden, oder um nach Empfang eines Rahmens (450) von dem Bus (40) das Signal (RXD) aus dem Rahmen (450) zu decodieren, und
Ausgeben, mit dem mindestens einen Ausgangs-Anschluss (156), eines Schaltsignals (S_INV) an die Kommunikationssteuereinrichtung (11), um das von dem Auswertemodul (153) ausgewertete mindestens eine Bit in dem von dem Protokoll-Steuerwerk (111) ausgegebenen Signal (TXD; RXD) zu stören,
wobei der mindestens eine Zähler (152) jedes Bit des Signals (TXD; RXD) auf der Grundlage der an dem mindestens einen Eingangs-Anschluss (1521, 1522) empfangenen Informationen zählt, und
wobei das Auswertemodul (153) das Schaltsignal (S_INV) auf der Grundlage des von dem Auswertemodul (153) ausgewerteten mindestens einen Bits erzeugt, wenn der mindestens eine Zähler (152) den Wert eines der Konfigurationsregister (151) annimmt.

## Claims

1. Error detection test device (15; 25; 35) for a subscriber station (10; 20; 30) of a serial bus system (1), having
an evaluation module (153) for evaluating which bit in a signal (TXD; RXD) must be disrupted so that the receivers of the resulting signal (TXD; RXD), in which the at least one bit is disrupted, can test the function of a predetermined error detection mechanism, wherein the signal (TXD; RXD) is processed, during operation of the subscriber station (10; 20; 30), by a protocol control unit (111) of a communication control device (11) of the subscriber station (10; 20; 30) in order to be transmitted as a frame (450) onto a bus (40) of the bus system (1) or, after a frame (450) has been received from the bus (40), to decode the signal (RXD) from the frame (450), and
at least one input connection (1521; 1522) for receiving information relating to the signal (TXD; RXD) from the protocol control unit (111),
at least one counter (152) for counting bits of the signal (TXD; RXD),
at least one configuration register (151) for specifying a predetermined counter value for the counter (152) after the error detection test device (15; 25; 35) has been switched on, and
at least one output connection (156) for outputting a switching signal (S_INV) to the communication control device (11) in order to disrupt the at least one bit evaluated by the evaluation module (153) in relation to the signal (TXD; RXD) output by the protocol control unit (111), wherein the at least one counter (152) is configured to count each bit of the signal (TXD; RXD) on the basis of the information received at the at least one input connection (1521, 1522), and
wherein the evaluation module (153) is configured to generate the switching signal (S_INV) on the basis of the at least one bit evaluated by the evaluation module (153) if the at least one counter (152) assumes the value of one of the configuration registers (151).

2. Error detection test device (15; 25; 35) according to Claim 1, also having a control module (154) for switching on the error detection test device (15; 25; 35) shortly before the start of the signal (TXD; RXD) or for switching off the error detection test device (15; 25; 35) after the end of the signal (TXD; RXD).

3. Error detection test device (15; 25; 35) according to Claim 1 or 2, wherein the evaluation module (153) and/or the control module (154) is/are configured to also evaluate an identifier (ID) of the frame (450) and/or a control bit with respect to the frame (450) to be transmitted, in order to determine whether or not the error detection test device (15; 25; 35) should be switched on shortly before the start of the signal (TXD; RXD) .

4. Error detection test device (15; 25; 35) according to one of Claims 1 to 3, also
wherein the at least one output connection (156; 157) is arranged to use the switching signal (S_INV) to signal when at least one part of a bit in the signal (TXD; RXD) is intended to be disrupted,
wherein the disruption of the signal (TXD; RXD) corresponds to a checksum error and/or a stuff error and/or a format error.

5. Error detection test device (15; 25; 35) according to one of the preceding claims,
wherein the at least one configuration register (151) is just as wide as the at least one counter (152), and wherein the range of values of the at least one counter (152) is at least so large that the bits of a longest possible frame (450) transmitted via the bus (40) can be counted.

6. Error detection test device (15; 25; 35) according to Claim 4 or 5, wherein the at least one counter (152) is configured to count each bit of the signal (TXD; RXD) on the basis of the information received at the at least one input connection (1521, 1522) and to output the switching signal (S_INV) at the output connection (156) when the counter value specified by the configuration register (151) has been reached.

7. Error detection test device (15; 25; 35) according to Claim 3 or 4,
wherein the signal is a transmission signal (TXD) which is to be transmitted in a frame (450) onto the bus (40), or
wherein the signal is a reception signal (RXD) which is to be received in a frame (450) from the bus (40), or wherein the signal was generated for an inter-frame space (IFS) between frames (450) on the bus (40).

8. Error detection test device (15; 25; 35) according to one of Claims 1 to 7, wherein, for a frame (450) exchanged between subscriber stations (10, 20, 30) of the bus system (1), the bit time (t_bt) of a signal transmitted onto the bus (40) in the first communication phase (451) differs from a bit time (t_bt) of a signal transmitted in the second communication phase (452).

9. Error detection test device (15; 25; 35) according to one of Claims 1 to 8, wherein the evaluation module (153) is configured to generate the switching signal (S_INV) in such a manner that the bit of the signal (TXD; RXD) is inverted.

10. Error detection test device (15; 25; 35) according to one of Claims 1 to 8,
wherein the evaluation module (153) is configured to generate the switching signal (S_INV) in such a manner that at least one time quantum (TQ) of the bit of the signal (TXD; RXD) is inverted,
wherein the bit is subdivided into at least two time quanta (TQ), and
wherein the error detection test device (15; 25; 35) is configured in such a manner that it is possible to configure into how many time quanta (TQ) the bit is subdivided.

11. Error detection test device (15; 25; 35) according to one of the preceding claims, wherein the frame (450) is compatible with CAN FD.

12. Subscriber station (10; 20; 30) for a serial bus system (1), having
at least one error detection test device (15; 25; 35) according to one of the preceding claims,
a communication control device (11; 21; 31) for controlling communication between the subscriber station (10; 30) and at least one other subscriber station (10; 20; 30) of the bus system (1), wherein the communication control device (11; 21; 31) has the protocol control unit (111) which is configured to process the signal (TXD; RXD), during operation of the subscriber station (10; 20; 30), in order to be transmitted as a frame (450) onto a bus (40) of the bus system (1) or, after a frame (450) has been received from the bus (40), to decode the signal (RXD) from the frame (450), and
a transmitting/receiving device (12; 32) for transmitting a transmission signal (TXD) generated by the communication control device (11; 31) as a frame (450) onto the bus (40) and/or for receiving a frame (450) from the bus (40).

13. Subscriber station (10; 20; 30) according to Claim 12,
also having a logic module (112) for inputting the signal (TXD; RXD) processed by the protocol control unit (111) and the switching signal (S_INV) and for outputting the disrupted signal (TXD1; RXD1), wherein the switching signal (S_INV) is active only for that part of the bit which is intended to be disrupted, and
wherein the transmitting/receiving device (12; 32) is configured to store the signal (TXD1; RXD1) disrupted using the at least one error detection test device (15; 25; 35) in order to evaluate the disrupted signal (TXD1; RXD1) .

14. Bus system (1), having
a bus (40), and
at least two subscriber stations (10; 20; 30) which are connected to one another via the bus (40) in such a manner that they can communicate serially with one another and at least one subscriber station (10; 30) of which is a subscriber station (10; 30) according to Claim 12 or 13.

15. Method for testing error detection mechanisms during communication in a serial bus system (1), wherein the method is carried out using an error detection test device (15; 25; 35) for a subscriber station (10; 20; 30) of the bus system (1), wherein the error detection test device (15; 25; 35) has an evaluation module (153), at least one input connection (1521; 1522), at least one counter (152), at least one configuration register (151) and at least one output connection (156), and wherein the method has the steps of
using the at least one configuration register (151) to specify a predetermined counter value for the counter (152) after the error detection test device (15; 25; 35) has been switched on,
using the at least one input connection (1521; 1522) to receive information relating to the signal (TXD; RXD) from the protocol control unit (111),
using the at least one counter (152) to count bits of the signal (TXD; RXD),
using the evaluation module (153) to evaluate which bit in a signal (TXD; RXD) must be disrupted so that the receivers of the resulting signal (TXD; RXD), in which the at least one bit is disrupted, can test the function of a predetermined error detection mechanism, wherein the signal (TXD; RXD) is processed, during operation of the subscriber station (10; 20; 30), by a protocol control unit (111) of a communication control device (11) of the subscriber station (10; 20; 30) in order to be transmitted as a frame (450) onto a bus (40) of the bus system (1) or, after a frame (450) has been received from the bus (40), to decode the signal (RXD) from the frame (450), and
using the at least one output connection (156) to output a switching signal (S_INV) to the communication control device (11) in order to disrupt the at least one bit evaluated by the evaluation module (153) in the signal (TXD; RXD) output by the protocol control unit (111), wherein the at least one counter (152) counts each bit of the signal (TXD; RXD) on the basis of the information received at the at least one input connection (1521, 1522), and
wherein the evaluation module (153) generates the switching signal (S_INV) on the basis of the at least one bit evaluated by the evaluation module (153) if the at least one counter (152) assumes the value of one of the configuration registers (151).

## Revendications

1. Dispositif de test de reconnaissance d'erreur (15 ; 25 ; 35) pour une station d'abonné (10 ; 20 ; 30) d'un système de bus série (1), comprenant
un module d'évaluation (153) destiné à évaluer quel bit doit être perturbé dans un signal (TXD ; RXD) pour que les récepteurs du signal (TXD ; RXD) résultant, avec lequel l'au moins un bit est perturbé, puissent vérifier le fonctionnement d'un mécanisme de reconnaissance d'erreur prédéterminé, le signal (TXD ; RXD), lors du fonctionnement de la station d'abonné (10 ; 20 ; 30), étant traité par un contrôleur de protocole (111) d'un dispositif de commande de communication (11) de la station d'abonné (10 ; 20 ; 30) afin d'être transmis sous la forme d'une trame (450) sur un bus (40) du système de bus (1) ou en vue de décoder le signal (RXD) à partir de la trame (450) après la réception d'une trame (450) en provenance du bus (40), et
au moins une borne d'entrée (1521 ; 1522) destinée à recevoir des informations à propos du signal (TXD ; RXD) de la part du contrôleur de protocole (111),
au moins un compteur (152) destiné à compter les bits du signal (TXD ; RXD),
au moins un registre de configuration (151) destiné à spécifier une valeur de compteur prédéterminée pour le compteur (152) après la mise en circuit du dispositif de test de reconnaissance d'erreur (15 ; 25 ; 35), et
au moins une borne de sortie (156) destinée à délivrer un signal de commutation (S_INV) au dispositif de commande de communication (11), afin de perturber l'au moins un bit évalué par le module d'évaluation (153) en référence au signal (TXD ; RXD) délivré par le contrôleur de protocole (111), l'au moins un compteur (152) étant configuré pour compter chaque bit du signal (TXD ; RXD) sur la base des informations reçues au niveau de l'au moins une borne d'entrée (1521, 1522), et
le module d'évaluation (153) étant configuré pour générer le signal de commutation (S_INV) sur la base de l'au moins un bit évalué par le module d'évaluation (153) lorsque l'au moins un compteur (152) prend la valeur de l'un des registres de configuration (151).

2. Dispositif de test de reconnaissance d'erreur (15 ; 25 ; 35) selon la revendication 1, comprenant en outre un module de commande (154) destiné à mettre en circuit le dispositif de test de reconnaissance d'erreur (15 ; 25 ; 35) juste avant le début du signal (TXD ; RXD) ou pour mettre hors circuit le dispositif de test de reconnaissance d'erreur (15 ; 25 ; 35) après la fin du signal (TXD ; RXD).

3. Dispositif de test de reconnaissance d'erreur (15 ; 25 ; 35) selon la revendication 1 ou 2, le module d'évaluation (153) et/ou le module de commande (154) étant configuré(s) pour, en plus, évaluer un identificateur (ID) de la trame (450) et/ou un bit de commande en référence à la trame (450) à envoyer afin de déterminer si le dispositif de test de reconnaissance d'erreur (15 ; 25 ; 35) doit ou non être mis en circuit juste avant le début du signal (TXD ; RXD).

4. Dispositif de test de reconnaissance d'erreur (15 ; 25 ; 35) selon l'une des revendications 1 à 3, avec en plus
l'au moins une borne de sortie (156 ; 157) étant disposée pour la signalisation avec le signal de commutation (S_INV) quand au moins une partie d'un bit dans le signal (TXD ; RXD) doit être perturbée,
la perturbation du signal (TXD ; RXD) correspondant à une erreur de somme de contrôle et/ou à une erreur de bourrage et/ou une erreur de format.

5. Dispositif de test de reconnaissance d'erreur (15 ; 25 ; 35) selon l'une des revendications précédentes, l'au moins un registre de configuration (151) ayant exactement la même largeur que l'au moins un compteur (152) , et
la plage de valeurs de l'au moins un compteur (152) étant au moins suffisamment grande pour que les bits d'une trame (450) la plus longue possible transmise par le biais du bus (40) puissent être comptés.

6. Dispositif de test de reconnaissance d'erreur (15 ; 25 ; 35) selon la revendication 4 ou 5, l'au moins un compteur (152) étant configuré pour compter chaque bit du signal (TXD ; RXD) sur la base des informations reçues au niveau de l'au moins une borne d'entrée (1521, 1522) et, lorsque la valeur de compteur prédéfinie par le registre de configuration (151) est atteinte, délivrer le signal de commutation (S_INV) au niveau de la borne de sortie (156).

7. Dispositif de test de reconnaissance d'erreur (15 ; 25 ; 35) selon la revendication 3 ou 4,
le signal étant un signal d'émission (TXD) qui doit être envoyé dans une trame (450) sur le bus (40), ou
le signal étant un signal de réception (RXD) qui doit être reçu dans une trame (450) en provenance du bus (40), ou
le signal ayant été généré pour un écart entre trames (IFS) entre les trames (450) sur le bus (40).

8. Dispositif de test de reconnaissance d'erreur (15 ; 25 ; 35) selon l'une des revendications 1 à 7, pour une trame (450) qui est échangée entre les stations d'abonné (10, 20, 30) du système de bus (1), le temps de bit (t_bt) d'un signal envoyé sur le bus (40) dans la première phase de communication (451) étant différent d'un temps de bit (t_bt) d'un signal envoyé dans la deuxième phase de communication (452).

9. Dispositif de test de reconnaissance d'erreur (15 ; 25 ; 35) selon l'une des revendications 1 à 8, le module d'évaluation (153) étant configuré pour générer le signal de communication (S_INV) de telle sorte que le bit du signal (TXD ; RXD) est inversé.

10. Dispositif de test de reconnaissance d'erreur (15 ; 25 ; 35) selon l'une des revendications 1 à 8,
le module d'évaluation (153) étant configuré pour générer le signal de commutation (S_INV) de telle sorte qu'au moins un quantum de temps (TQ) du bit du signal (TXD ; RXD) est inversé,
le bit étant subdivisé en au moins deux quanta de temps (TQ) et
le dispositif de test de reconnaissance d'erreur (15 ; 25 ; 35) étant configuré de telle sorte qu'il est possible de configurer le nombre de quanta de temps (TQ) en lesquels le bit est subdivisé.

11. Dispositif de test de reconnaissance d'erreur (15 ; 25 ; 35) selon l'une des revendications précédentes, la trame (450) étant constituée de manière compatible avec CAN FD.

12. Station d'abonné (10 ; 20 ; 30) pour un système de bus série (1), comprenant
au moins un dispositif de test de reconnaissance d'erreur (15 ; 25 ; 35) selon l'une des revendications précédentes,
un dispositif de commande de communication (11 ; 21 ; 31) destiné à commander une communication de la station d'abonné (10 ; 30) avec au moins une autre station d'abonné (10 ; 20 ; 30) du système de bus (1), le dispositif de commande de communication (11 ; 21 ; 31) possédant le contrôleur de protocole (111), lequel est configuré pour traiter le signal (TXD ; RXD) lors du fonctionnement de la station d'abonné (10 ; 20 ; 30) afin qu'il soit transmis sous la forme d'une trame (450) sur un bus (40) du système de bus (1) ou pour décoder le signal (RXD) à partir de la trame (450) après la réception d'une trame (450) en provenance du bus (40), et
un dispositif d'émission/réception (12 ; 32) destiné à émettre un signal d'émission (TXD) généré par le dispositif de commande de communication (11 ; 31) sous la forme d'une trame (450) sur le bus (40) et/ou à recevoir une trame (450) en provenance du bus (40).

13. Station d'abonné (10 ; 20 ; 30) selon la revendication 12,
comprenant en outre un module logique (112) destiné à recevoir en entrée le signal (TXD ; RXD) traité par le contrôleur de protocole (111) et le signal de commutation (S_INV) et à délivrer en sortie le signal perturbé (TXD1 ; RXD1), le signal de commutation (S_INV) n'étant actif que pour la partie du bit qui doit être perturbée, et
le dispositif d'émission/réception (12 ; 32) étant configuré pour mémoriser le signal perturbé (TXD1 ; RXD1) par l'au moins un dispositif de test de reconnaissance d'erreur (15 ; 25 ; 35) afin d'évaluer le signal perturbé (TXD1 ; RXD1).

14. Système de bus (1), comprenant
un bus (40), et
au moins deux stations d'abonné (10 ; 20 ; 30), lesquelles sont reliées l'une à l'autre par le biais du bus (40), de telle sorte qu'elles peuvent communiquer en série entre elles et parmi lesquelles au moins une station d'abonné (10 ; 30) est une station d'abonné (10 ; 30) selon la revendication 12 ou 13.

15. Procédé pour tester des mécanismes de reconnaissance d'erreur lors d'une communication dans un système de bus série (1), le procédé étant mis en œuvre avec un dispositif de test de reconnaissance d'erreur (15 ; 25 ; 35) pour une station d'abonné (10 ; 20 ; 30) du système de bus (1), le dispositif de test de reconnaissance d'erreur (15 ; 25 ; 35) comprenant un module d'évaluation (153), au moins une borne d'entrée (1521 ; 1522), au moins un compteur (152), au moins un registre de configuration (151) et au moins une borne de sortie (156), et le procédé comprenant les étapes suivantes :
spécification, avec l'au moins un registre de configuration (151), d'une valeur de compteur prédéterminée pour le compteur (152) après la mise en circuit du dispositif de test de reconnaissance d'erreur (15 ; 25 ; 35), et
réception, avec l'au moins une borne d'entrée (1521 ; 1522), d'informations à propos du signal (TXD ; RXD) de la part du contrôleur de protocole (111),
comptage, avec l'au moins un compteur (152), des bits du signal (TXD ; RXD),
évaluation, avec le module d'évaluation (153), de quel bit doit être perturbé dans un signal (TXD ; RXD) pour que les récepteurs du signal (TXD ; RXD) résultant, avec lequel l'au moins un bit est perturbé, puissent vérifier le fonctionnement d'un mécanisme de reconnaissance d'erreur prédéterminé, le signal (TXD ; RXD), lors du fonctionnement de la station d'abonné (10 ; 20 ; 30), étant traité par un contrôleur de protocole (111) d'un dispositif de commande de communication (11) de la station d'abonné (10 ; 20 ; 30) afin d'être transmis sous la forme d'une trame (450) sur un bus (40) du système de bus (1) ou en vue de décoder le signal (RXD) à partir de la trame (450) après la réception d'une trame (450) en provenance du bus (40), et
délivrance, avec l'au moins une borne de sortie (156), d'un signal de commutation (S_INV) au dispositif de commande de communication (11), afin de perturber l'au moins un bit évalué par le module d'évaluation (153) dans le signal (TXD ; RXD) délivré par le contrôleur de protocole (111),
l'au moins un compteur (152) comptant chaque bit du signal (TXD ; RXD) sur la base des informations reçues au niveau de l'au moins une borne d'entrée (1521, 1522), et
le module d'évaluation (153) générant le signal de commutation (S_INV) sur la base de l'au moins un bit évalué par le module d'évaluation (153) lorsque l'au moins un compteur (152) prend la valeur de l'un des registres de configuration (151).
